# EUROPÄISCHE PATENTSCHRIFT

(11) **EP 2 164 746 B1**
(45) Veröffentlichungstag und Bekanntmachung des Hinweises auf die Patenterteilung: **15.08.2012**
(21) Anmeldenummer: 08760502.8
(22) Anmeldetag: 04.06.2008
(51) Int. Cl.: B62D 7/15

(54) **LENKVORRICHTUNG ZUM EINSTELLEN EINES RADEINSCHLAGWINKELS**
STEERING DEVICE FOR ADJUSTING A WHEEL STEERING ANGLE
DISPOSITIF DE DIRECTION DESTINÉ AU RÉGLAGE D'UN ANGLE DE BRAQUAGE DE ROUE

(30) Priorität: 04.06.2007 DE 102007026198; 27.09.2007 DE 102007046633; 19.02.2008 DE 102008010069; 14.04.2008 DE 102008018978
(43) Veröffentlichungstag der Anmeldung: 24.03.2010
(73) Patentinhaber: Continental Teves AG & Co. OHG, 60488 Frankfurt (DE)
(72) Erfinder: BÖHM, Jürgen, 65558 Oberneisen (DE); MUTH, Norman, 35066 Frankenberg (DE); LINKENBACH, Steffen, 65760 Eschborn (DE); KAUFMANN, Tom, 55566 Ippenschied (DE)
(86) Internationale Anmeldenummer: PCT/EP2008/056921
(87) Internationale Veröffentlichungsnummer: WO 2008/148806

(56) Entgegenhaltungen:
- WO-A-2006/117343
- DE-A1- 3 942 494
- DE-A1- 19 720 602

## Beschreibung

### Gebiet der Erfindung

Die Erfindung betrifft eine Lenkvorrichtung zum Einstellen eines Radeinschlagwinkels eines Rades eines Kraftfahrzeugs nach dem Oberbegriff des Patentanspruchs 1. Die vorliegende Erfindung betrifft also eine Lenkvorrichtung, die ein Radführungsglied zum Ändern des Radeinschlagwinkels des Rades und ein Lenkungssteuergerät zum Steuern des Radfubrungsgliedes aufweist, wobei das Lenkungssteuergerät eine erste Ermittlungseinheit für eine Grundlenkfunktion und eine Aktuatorwegregelung aufweist und wobei die erste Ermittlungseinheit für die Grundlenkfunktion zur Ermittlung eines ersten Lenkwinkelsollwertes Eingangssignale von Sensoren erhält, wobei die Eingangssignale mindestens die Fahrzeuggeschwindigkeit sowie den Fahrerlenkwinkel wiedergeben und wobei die Aktuatorwegregelung zur Einstellung eines Weges des Radführungsgliedes auf Basis des ersten Lenkwinkelsollwertes ausgeführt ist.

### Technologischer Hintergrund

Bekannte Lenkvorrichtungen für eine Hinterachslenkung weisen ähnlich wie konventionelle Vorderachslenkungssysteme eine Spurstange auf, die das rechte und linke Hinterrad miteinander verbindet. Das Einstellen eines Radeinschlagwinkels erfolgt dabei durch eine elektromechanisch oder elektrohydraulisch gesteuerte Verschiebung der Spurstange. Derartige Lenkvorrichtungen erfordern jedoch einen erheblichen konstruktiven Aufwand.

Aus der WO 2006/117343 A1 ist eine Lenkvorrichtung der eingangs genannten Gattung bekannt. Das Lenkungssteuergerät der vorbekannten Lenkvorrichtung umfasst hierbei eine Grundlenkfunktion und eine Aktuatorwegregelung zur Einstellung eines Weges des Radführungsgliedes auf Basis eines Lenkwinkelsollwertes.

### Zusammenfassung der Erfindung

Es ist eine Aufgabe der Erfindung, eine verbesserte Lenkfunktion und eine verbesserte Aktuatorregelung zur Einstellung eines aufgrund der Lenkfunktion vorgegebenen Achslenkwinkels für eine Radlenkung anzugeben.

Diese Aufgabe wird durch eine Lenkvorrichtung mit den Merkmalen des Patentanspruchs 1 gelöst. Vorteilhafte Weiterbildungen ergeben sich aus den Unteransprüchen. Dabei ist sind eine Arbitrierungseinheit und eine zweite Ermittlungseinheit vorgesehen, wobei die Arbitrierungseinheit zur Ermittlung eines zweiten, korrigierten Lenkwinkelsollwertes aus dem ersten Lenkwinkelsollwert und gegebenenfalls unter Berücksichtigung eines Korrekturlenkwinkels für die zweite Ermittlungseinheit ausgeführt ist; und wobei die Arbitrierungseinheit zur Berechung des Lenkwinkelsollwertes auf Basis eines durch die erste Ermittlungseinheit bereitgestellten Sollwertes, der mit einer Fahrervorgabe korrespondiert, eines Lenkwinkelkorrektursignals und eines Skalierungsfaktors zur Abschwächung eines Fahreranteils ausgeführt ist; und wobei die zweite Ermittlungseinheit der Aktuatorwegregelung für die Berechnung eines einzustellenden Weges des Radführungsgliedes vorgeschaltet ist.

Gemäß der Erfindung weist die Lenkvorrichtung eine Arbitrierungseinheit und eine zweite Ermittlungseinheit auf. Die Arbitrierungseinheit dient der Ermittlung eines zweiten, korrigierten Lenkwinkelsollwertes aus dem ersten Lenkwinkelsollwert, welcher dann der zweiten Ermittlungseinheit zugeführt wird. Die zweite Ermittlungseinheit ist der Aktuatorwegregelung für die Einstellung eines Weges des Radführungsgliedes vorgeschaltet. Die Arbitrierungseinbeit ist zur Berechnung des Lenkwinkelsollwertes auf Basis eines durch die erste Ermittlungseinheit bereitgestellten Sollwertes, der mit einer Fahrervorgabe korrespondiert, eines Lenkwinkelkorrektursignals und eines Skalierungsfaktors zur Abschwächung eines Fahreranteils ausgeführt.

In anderen Worten wird der von der Grundlenkfunktion (erste Ermittlungseinheit) berechnete Sollwert für den Lenkwinkel von der Arbitrierungseinheit modifiziert. Die Modifikation des Lenkwinkelsollwertes kann beispielsweise auf Basis zusätzlicher Lenkwinkelkorrektursignale eines Fahrdynamikreglers sowie eines Skalierungsfaktors erfolgen.

Die zweite Ermittlungseinheit berechnet auf Basis des zweiten, korrigierten Lenkwinkelsollwertes dann den Weg des Radführungsgliedes (Spurstangenweg), der dann der Aktuatorwegregelung zugeführt wird. Aus diesem Sollwert berechnet dann die Aktuatorwegregelung geeignete Stellgrößen für den Aktuator bzw. die Aktuatoren, um das Radführungsglied entsprechend einzustellen.

Gemäß einem Ausführungsbeispiel der Erfindung handelt es sich bei dem Rad um ein Hinterrad des Kraftfahrzeugs.

Die Lenkvorrichtung ist in diesem Falle also eine (elektromechanisch betätigbare) Hinterradlenkung (ARK).

Allerdings kann die Lenkvorrichtung auch zur Korrektur oder Regelung einer Vorderradlenkung eingesetzt werden.

Gemäß einem weiteren Ausführungsbeispiel der Erfindung ist die Lenkvorrichtung zum Durchführen einer radindividuellen Lenkbewegung ausgeführt.

Die linken und rechten Hinterräder bzw. die linken und rechten Vorderräder können also unabhängig voneinander, einzeln gelenkt werden.

Gemäß einem weiteren Ausführungsbeispiel der Erfindung weist die Lenkvorrichtung weiterhin eine Antriebseinheit auf, wobei das Radführungsglied mittels der Antriebseinheit in seiner Länge verstellbar ist, und wobei eine Längenänderung des Radführungsgliedes eine Veränderung des Radeinschlagwinkels des Rades bewirkt.

Gemäß einem weiteren Ausführungsbeispiel der Erfindung weist die Lenkvorrichtung weiterhin einen Radträger zum Tragen des Rades auf. Der Radträger ist über das Radführungsglied mit einem Fahrzeugaufbau verbunden, wobei der Radträger um eine im wesentlichen parallel zur Radebene verlaufende Achse einstellbar ist und das Radführungsglied in einem Abstand (also beabstandet) von der Achse an dem Radträger angelenkt ist.

Gemäß einem weiteren Ausführungsbeispiel der Erfindung weist die Aktuatorwegregelung einen Positionsregler, einen Motordrehzahlregler für einen Elektromotor des Radführungsgliedes, eine erste Regelschleife zur Bereitstellung eines Motordrehzahlistwertes für den Elektromotor des Radführungsgliedes und eine zweite Regelschleife zur Bereitstellung eines Spurstangenwegistwertes für den Positionsregler auf.

Gemäß einem weiteren Ausführungsbeispiel der Erfindung weist die Ermittlungseinheit für die Grundlenkfunktion eine Geschwindigkeitsverstärkungseinheit zur Ermittlung eines dynamischen Anteils für den ersten Lenkwinkelsollwert auf.

Gemäß einem weiteren Ausführungsbeispiel der Erfindung weist die erste Ermittlungseinheit für die Grundlenkfunktion eine Lenkübersetzungseinheit zur Ermittlung eines variablen Lenkübersetzungsfaktors (i_{VSR}) auf Basis einer aktuellen Fahrzeuggeschwindigkeit auf, woraus dann ein statischer Anteil für den ersten Lenkwinkelsollwert berechnet wird.

Gemäß einem weiteren Ausführungsbeispiel der Erfindung ist die erste Ermittlungseinheit zur Modifikation des variablen Lenkübersetzungsfaktors in Abhängigkeit von einer Fahrervorgabe ausgeführt.

Gemäß einem weiteren Ausführungsbeispiel der Erfindung erfolgt die Modifikation des variablen Lenkübersetzungsfaktors abhängig von der aktuellen Fahrzeuggeschwindigkeit.

Gemäß einem weiteren Ausführungsbeispiel der Erfindung korrespondiert die Fahrervorgabe mit einem gemessenen Lenkradwinkel und einer Lenkradwinkelgeschwindigkeit.

Hierbei kann, gemäß einem weiteren Ausführungsbeispiel der Erfindung, die Modifikation auf Basis einer Fuzzy Logik erfolgen.

Gemäß einem weiteren Ausführungsbeispiel der Erfindung erfolgt die Modifikation des Lenkübersetzungsfaktors mit Hilfe eines Skalierungsfaktors, welcher fahrgeschwindigkeitsabhängig ist auf im Hinblick auf eine Fahrstabilität sinnvolle Werte begrenzt ist.

In anderen Worten wird der von der Fahrzeuggeschwindigkeit abhängige Lenkübersetzungsfaktor i_{VSR},_{Base} in Abhängigkeit von den Fahrervorgaben Lenkradwinkel und Lenkradwinkelgeschwindigkeit modifiziert. Dies geschieht mit Hilfe eines Skalierungsfaktors SC für i_{VSR},_{Base}, welcher fahrgeschwindigkeitsabhängig auf im Hinblick auf die Fahrstabilität sinnvolle Werte begrenzt wird. Dadurch kann das durch den Lenkübersetzungsfaktor i_{VSR} bestimmte Verhältnis von Vorderrad- zu Hinterradlenkwinkel besser an den jeweiligen Betriebszustand des Fahrzeuges, hier definiert durch die Fahrzeuggeschwindigkeit, den Fahrerlenkwinkel und die Fahrerlenkwinkelgeschwindigkeit, angepasst werden. Gemäß einem weiteren Ausführungsbeispiel der Erfindung weist die Lenkvorrichtung weiterhin eine Sensoreinrichtung zur Bereitstellung von Messdaten aus einem Umfeld des Fahrzeugs auf. Die Messdaten fließen in die Regelung bzw. Steuerung des Radeinschlagwinkels des Rades mit ein.

Bei der Sensoreinrichtung kann es sich, gemäß einem weiteren Ausführungsbeispiel der Erfindung, um einen Radarsensor, einen Lidarsensor, einen optischen Sensor oder einen Ultraschallsensor handeln. Auch können Kombinationen dieser Sensortypen vorgesehen sein, welche in die Ermittlung des Sollwertes für den Radeinschlagwinkel mit einfließen.

Gemäß einem weiteren Ausführungsbeispiel der Erfindung weist die Sensoreinrichtung weiterhin eine Positionsbestimmungseinheit mit einem Satellitennavigationsempfänger und einer digitalen Karten auf.

Der Satellitennavigationsempfänger kann für ein globales Navigationssatellitensystem (GNSS) ausgeführt sein, wie zum Beispiel GPS, Galileo, GLONASS (Russland), KOMPASS (China), IRNSS (Indien).

Über die Zusatzinformationen aus der digitalen Karte, gepaart mit präzisen Positionsangaben hinsichtlich der aktuellen Fahrzeugposition, können sicherheitsrelevante Daten erzeugt werden, welche in die Ermittlung des Sollwerts für den Radeinschlagwinkel des Rades mit einfließen. Beispielsweise kann in der digitalen Karte verzeichnet sein, dass Öl oder Laub auf der Fahrbahn liegt.

Sollte ein Ausweichmanöver notwendig sein, kann dieses dann entsprechend früher unterstützt werden, da starke Richtungsänderungen in diesem Falle nicht möglich sind.

Gemäß einem weiteren Ausführungsbeispiel der Erfindung ist die Sensoreinrichtung zur Bestimmung eines Abstandes zwischen dem Fahrzeug und einem Objekt ausgeführt.

Bei dem Objekt handelt es sich beispielsweise um ein anderes Fahrzeug oder ein sonstiges Hindernis.

Gemäß einem weiteren Ausführungsbeispiel der Erfindung weist die Lenkvorrichtung weiter eine Analyseeinheit zur Analyse der Messdaten und zur Erkennung einer Gefahrensituation auf Basis der Analyse, wobei die Lenkung zur Anpassung der Lenkfunktion eine Gefahrensituation ausgeführt ist, wenn eine Gefahrensituation erkannt wurde.

Gemäß einem weiteren Ausführungsbeispiel der Erfindung umfasst die Anpassung der Lenkfunktion an die Gefahrensituation ein automatisches Umschalten von der aktuellen Grundlenkfunktion auf eine gleichsinnig wirkende statische Kennlinie für die variable Lenkübersetzung.

Gemäß einem weiteren Ausführungsbeispiel der Erfindung basiert die Analyse auf dem von der Sensoreinrichtung bestimmten Abstand zwischen dem Fahrzeug und dem Objekt und einer geschätzten Zeit, nach welcher ein kritischer Abstand zu dem Objekt erreicht ist.

Auf diese Weise kann die Sicherheit im Straßenverkehr weiter erhöht werden.

An dieser Stelle sei anzumerken, dass die vorherigen und die nachfolgenden beschriebenen Ausführungsbeispiele unabhängig von einer bestimmten konstruktiven Ausführung der Radlenkung sind und somit sowohl bei einer Lenkungsanordnung mit zwei separaten Einzelaktuatoren für jedes Hinter- bzw. Vorderrad als auch bei einem Zentralaktuator eingesetzt werden können.

Gemäß einem weiteren Ausführungsbeispiel der Erfindung weist die Lenkvorrichtung weiterhin einen Festwertregler zur Bestimmung eines zusätzlichen Motorsollmotors und ein Funktionsmodul zur bedarfsabhängigen oder situationsabhängigen Aktivierung des Festwertreglers auf.

Gemäß einem weiteren Ausführungsbeispiel der Erfindung erfolgt die Bestimmung des zusätzlichen Motorsollmoments durch den Festwertregler auf Basis einer von einem Sensor gemessenen Position des Motors.

Gemäß einem weiteren Ausführungsbeispiel der Erfindung ist der Sensor ein Wegsensor oder ein Motorwinkelsensor.

Gemäß einem weiteren Ausführungsbeispiel der Erfindung ist der Festwertregler ein Motorregler mit einem proportional, differenzierendem Verhalten.

Gemäß einem weiteren Ausführungsbeispiel der Erfindung erfolgt die Aktivierung des Festwertreglers durch das Funktionsmodul auf Basis des Spurstangensollwertes von der zweiten Ermittlungseinheit.

Gemäß einem weiteren Ausführungsbeispiel der Erfindung wird dem Festwertregler bei Aktivierung auch der aktuell vorliegende Positionssollwert zugeführt und fortlaufend aktualisiert.

Gemäß einem weiteren Ausführungsbeispiel der Erfindung ist ein Fahrzeug mit einer oben beschriebenen Lenkvorrichtung vorgesehen.

Gemäß einem weiteren Ausführungsbeispiel der Erfindung ist die Verwendung einer Lenkvorrichtung in ein Fahrzeug angegeben.

Im Folgenden werden mit Verweis auf die Figuren bevorzugte Ausführungsbeispiele der Erfindung beschrieben.

### Kurze Beschreibung der Figuren

Fig. 1 zeigt eine schematische Darstellung einer ARK-Systemanordung (Lenkungsvorrichtung) mit zwei Einzelaktuatoren.
Fig. 2 zeigt eine ARK-Systemanordnung mit einem Zentralaktuator.
Fig. 3 zeigt eine Blockschaltbilddarstellung einer Grundstruktur der Lenkfunktion für ARK gemäß einem Ausführungsbeispiel der Erfindung.
Fig. 4 zeigt eine Grundstruktur der ARK-Aktuatorwegregelung gemäß einem Ausführungsbeispiel der Erfindung.
Fig. 5 zeigt eine Blockschaltbilddarstellung für die Arbitrierung der Lenkwinkelsollwerte gemäß einem Ausführungsbeispiel.
Fig. 6 zeigt eine Grundlenkfunktion mit variabler Lenkübersetzung für eine Hinteroder Vorderradlenkung und Berücksichtigung der Fahrervorgaben gemäß einem Ausführungsbeispiel der Erfindung.
Fig. 7 zeigt eine weitere Grundstruktur einer variablen Lenkübersetzung für eine Hinter- oder Vorderradlenkung mit Berücksichtigung der Fahrervorgaben gemäß einem weiteren Ausführungsbeispiel der Erfindung.
Fig. 8 zeigt ein Blockschaltbild einer fahrerwunschabhängigen Skalierung für einen Lenkübersetzungsfaktor i_{VSR},_{Base} gemäß einem Ausführungsbeispiel der Erfindung.
Fig. 9A zeigt eine schematische Darstellung einer Vernetzung des ARK-Systems mit Umfeldsensorik (Radarsensor) zur Anpassung der ARK-Lenkfunktion an Gefahrensituationen gemäß einem Ausführungsbeispiel der Erfindung.
Fig. 9B zeigt eine Blockschaltbilddarstellung einer ARK-Grundlenkfunktion unter Berücksichtigung von Umfeldsensorik (Radarsensor) zur Anpassung der ARK-Lenkfunktion an Gefahrensituationen gemäß einem Ausführungsbeispiel der Erfindung.
Fig. 10 zeigt eine schematische Darstellung einer Grundstruktur einer ARK-Aktuatorwegregelung gemäß einem Ausführungsbeispiel der Erfindung.
Fig. 11 zeigt eine Blockschaltbilddarstellung einer Struktur der Aktuatorwegregelung mit situationsabhängig aktivierbarer Festwertregelung gemäß einem Ausführungsbeispiel der Erfindung.
Fig. 12 zeigt eine Blockschaltbilddarstellung einer Struktur der Aktuatorwegregelung mit einer situationsabhängig aktivierbaren Festwertregelung bei Einsatz eines elektronisch kommutierten Motors gemäß einem Ausführungsbeispiel der Erfindung.
Fig. 13 zeigt eine schematische Darstellung einer Struktur eines Festwertreglers zum Ausregeln von Störanregungen oder externen Lastkräften beim Einsatz eines elektronisch kommutierten Motors gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

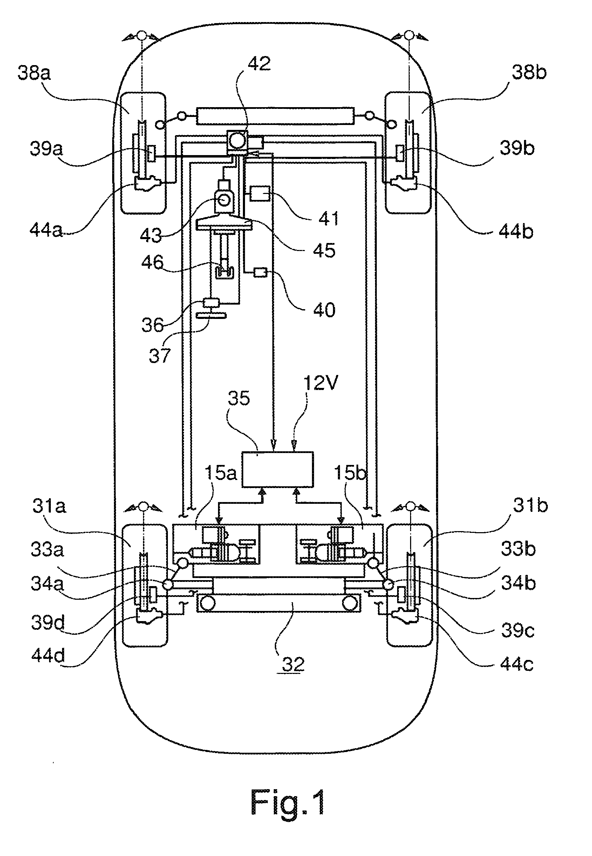

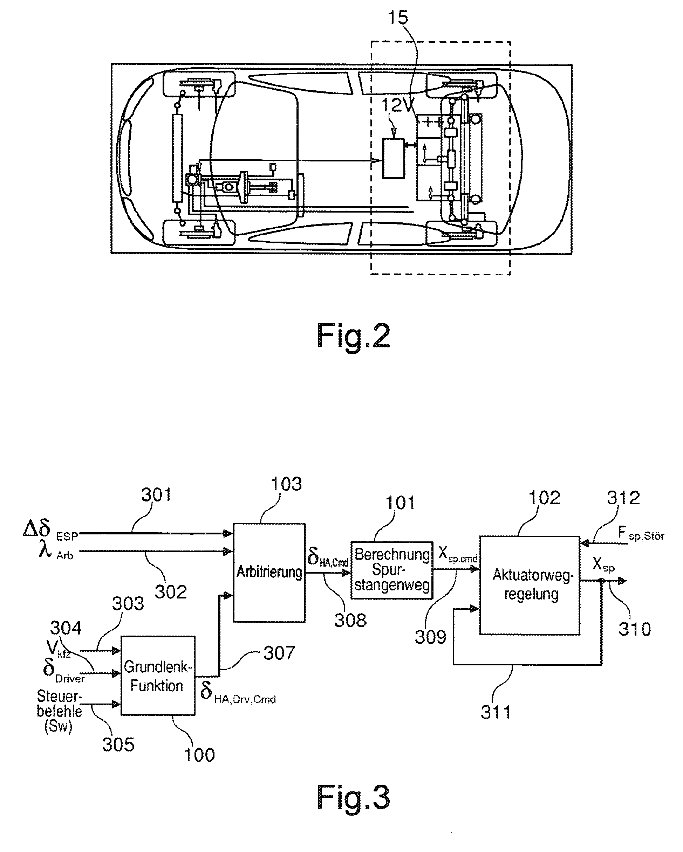

Fig. 1 und 2 zeigen zwei Hinterradlenkungen (ARK) mit jeweils zwei Einzelaktuatoren bzw. einem Zentralaktuator.

Die Hinterradlenkungen der Fig. 1 und 2 wurden bereits in der WO 2006/117343 eingehend beschrieben und werden nachfolgend nur soweit erforderlich betrachtet. Die radindividuelle Lenkbewegung der beiden Hinterräder 31a, 31b wird dabei durch eine, mittels 2 Elektromotoren elektromechanisch verstellbare Spurstange des Hinterachsintegralträgers erreicht.

Fig. 1 zeigt in schematischer Darstellung ein vierrädriges Kraftfahrzeug mit einem linken Hinterrad 31a und einem rechten Hinterrad 31b. Die Hinterräder 31a, 31b sind durch einen Hinterachsträger 32 an dem Fahrzeug befestigt. Jedem Hinterrad 31 a, 31b ist eine Spurstange 15a und 15b zugeordnet, bei der es sich jeweils um eine in ihrer Länge verstellbare Spurstange 15 handelt. Die Spurstangen greifen über in der Figur schematisch dargestellte Hebel 33a, 33b an die Hinterräder 31a, 31b an, so dass diese sich aufgrund von Längenänderungen der Spurstangen 15a, 15b bezüglich einer Schwenkachse 34a, 34b um einen Winkel verschwenken lassen. Die Hebel 33a, 33b ergeben sich dadurch, dass die Spurstangen 15a und 15b außerhalb der Mittelpunkte der Radträger an diese angreifen.

Die Ansteuerung der Spurstangen erfolgt durch ein Hinterachslenkungssteuergerät 35, mit dem die Spurstangen 15a, 15b jeweils über eine elektronische Schnittstelle verbunden sind. Das Hinterachslenkungssteuergerät 35 wird dabei über die 12-Volt-Versorgungsspannung des Bordnetzes des Fahrzeugs versorgt. Über die Schnittstelle können insbesondere Steuerbefehle zur Ansteuerung des Motors der Spurstangen 15a, 15b einerseits sowie andererseits Signale von Wegsensoren, welche die Position der Schubstange innerhalb des Gehäuses der Spurstange erfassen, übermittelt werden. Innerhalb des Hinterachslenkungssteuergerätes 35 kann aus diesen Signalen der jeweils aktuelle Radeinschlagswinkel der Hinterräder 31a, 31b ermittelt werden. Die beiden Spurstangen 15a, 15b können dabei eigenständige Module darstellen, die unabhängig voneinander angesteuert werden können, so dass an jedem Hinterrad 31a, 31b grundsätzlich ein frei wählbarer Radeinschlagswinkel einstellbar ist. Die Ansteuerung erfolgt anhand eines Regelverfahrens in Abhängigkeit von verschiedenen Fahrzeuggrößen, die insbesondere mit Hilfe von Sensoren gemessen werden. Vorzugsweise wird zur Durchführung des Regelverfahrens die Sensorik eines Fahrdynamikregelsystems, beispielsweise eines ESP-Systems (ESP: Electronic Stability Program), verwendet. Diese umfasst üblicherweise einen Lenkwinkelsensor 36 zum Erfassen des Lenkwinkels, den der Fahrer mittels einer Lenkhandhabe 37 an den lenkbaren Vorderrädern 38a, 38b eingestellt hat, einen Raddrehzahlsensor 39a, 39b, 39c, 39d an jedem Rad des Fahrzeugs, einen Pedalwegsensor 40 zum Erfassen der Stellung des Fahrpedals, sowie einen Gierratensensor bzw. einen Sensorcluster 41, der einen Gierratensensor, einen Querbeschleunigungssensor und einen Längsbeschleunigungssensor enthält.

Diese Signale werden üblicherweise in einem ESP-Steuergerät empfangen und ausgewertet. Das ESP-Steuergerät ist üblicherweise mit einer elektrohydraulischen Einheit zur Durchführung von Bremseneingriffen in einer Baugruppe 42 integriert. Über die elektrohydraulische Einheit ist dabei der Hauptbremszylinder 43 der hydraulischen Fahrzeugbremsanlage mit den Radbremsen 44a, 44b, 44c, 44d verbunden. Mithilfe elektronisch steuerbarer Ventile lässt sich dabei der von dem Fahrer über den Bremskraftverstärker 45 mittels einer Bremsenbetätigungseinrichtung 46 aufgebaute Bremsdruck radindividuell modifizieren. Ferner verfügt die Hydraulikeinheit über eine Druckaufbaueinrichtung, mit der fahrerunabhängig Bremseneingriffe zur Stabilisierung des Fahrzeugs vorgenommen werden können, die von dem ESP-Steuergerät aufgrund eines dem Fachmann an sich bekannten Regelverfahrens gesteuert werden.

Bei der in Figur 1 dargestellten Ausführungsform ist eine Schnittstelle zur Signalübertragung zwischen dem ESP-Steuergerät und dem Hinterachslenkungssteuergerät 35 vorgesehen. Die Signalübertragung kann dabei beispielsweise über ein Datenbussystem, wie das üblicherweise in Kraftfahrzeugen eingesetzte CAN (Controller Area Network), erfolgen.

Die Schnittstelle kann zur Übertragung der Signale der ESP-Sensorik an das Hinterachslenkungssteuergerät 35 genutzt werden, welches in Abhängigkeit von den Sensorsignalen anhand eines Regelverfahrens Sollwertvorgaben für die Radeinschlagswinkel der Hinterräder 31a, 31b bzw. die Längen der Spurstangen 15a, 15b generiert. Gleichfalls kann es auch vorgesehen sein, dass diese Sollwertvorgaben in dem ESP-Steuergerät bestimmt und über die Schnittstelle an das Hinterachslenkungssteuergerät 35 übertragen werden, welches die Spurstangen 15a, 15b dann entsprechend der Sollwertvorgaben ansteuert.

Grundsätzlich können die Hinterräder 31a, 31b dabei gleichsinnig oder gegensinnig in Bezug auf die Lenkbewegung der Vorderräder 38a, 38b eingelenkt werden. Durch ein gegensinniges Einlenken der Hinterräder 31a, 31b und der Vorderräder 38a, 38b verringert sich bei gleichbleibendem Lenkwinkel an den Vorderrädern 38a, 38b der Kurvenradius, so dass eine Erhöhung der Agilität des Fahrzeugs erreicht werden kann. Werden die Hinterräder 31a, 31b gleichsinnig zu den Vorderrädern eingelenkt, verringert sich die Gierrate des Fahrzeugs, so dass das Fahrzeug in kritischen Fahrsituationen stabilisiert werden kann.

Der Aufbau des in der WO2006/117343 dargestellten Hinterachssteuergerätes wurde in noch nicht veröffentlichten Anmeldungen im Detail betrachtet.

Wie in Fig. 2 dargestellt ist, können alternativ hierzu bei bestimmten Hinterachskonstruktionen die beiden Einzelaktuatoren der beiden Spurstangen 15a, 15b der Figur 1 auch durch einen zentralen Einzelaktuator einer zentralen Spurstange 15 ersetzt werden.

Die in den Fig. 3 bis 13 schematisch dargestellten Anordnungen zur Realisierung der Lenkfunktion kann auf die in den Fig. 1 und 2 offenbarten beiden Aktuatorkonzepte (Zentralaktuator/Einzelaktuator) angewendet werden.

Fig. 3 zeigt die Grundstruktur dieser Lenkfunktion für ARK gemäß einem Ausführungsbeispiel der Erfindung. Sie besteht im Wesentlichen aus den Funktionsblöcken mit der Ermittlungseinheit 100 für die Grundlenkfunktion, die Arbitrierung bzw. Arbitrierungseinheit 103 und die zweite Ermittlungseinheit 101 für die Berechnung des Spurstangenwegs und die Aktuatorwegregelung 102.

Dem Modul zur Bereitstellung der Grundlenkfunktion (erste Ermittlungseinheit 100) werden die aktuell gemessene Fahrzeuggeschwindigkeit 303, der Fahrerlenkwinkel 304 sowie weitere Steuerbefehle 305 zugeführt. Daraus berechnet die erste Ermittlungseinheit 100 den Sollwert 307 für den Hinterachslenkwinkel, welcher der Arbitrierungseinheit 103 zugeführt wird. Weiterhin werden der Arbitrierungseinheit 103 zusätzliche Lenkwinkelkorrektursignale 301 sowie ein Skalierungsfaktor 302 zugeführt.

Daraus berechnet die Arbitrierungseinheit 103 einen neuen Sollwert für den Hinterradachslenkwinkel 308, der der Berechnungseinheit für den Spurstangenweg (zweite Ermittlungseinheit 101) zugeführt wird. Die zweite Ermittlungseinheit 101 berechnet daraus dann den Spurstangensollwert 309, der der Aktuatorwegregelung 102 zugeführt wird. Weiterhin wird der Aktuatorwegregelung 102 ein Signal für den Istwert des Spurstangenweges 310 zugeführt. Hierfür ist eine Regelschleife 311 vorgesehen. Die Aktuatorwegregelung 102 berechnet daraus dann das Steuer- bzw. Regelsignal für den Spurstangenweg 310. Störeinflüsse, wie sie beispielsweise durch Störanregungen von der Straße verursacht werden, wirken in Form einer Störkraft 312 auf die Aktuatormechanik und beeinflussen die Aktuatorwegregelung.

Eingangssignale für die Grundlenkfunktion 100 sind die Fahrzeuggeschwindigkeit V_{Kfz} 303 sowie der Fahrerlenkwinkel δ _{Driver} 304 (Lenkradwinkel bzw. Radlenkwinkel der Vorderachse), welche z.B. durch das elektronische Stabilitätsprogramm (ESP) als Messsignale bereitgestellt werden. An dieser Stelle sei angemerkt, dass insbesondere im Falle des Lenkwinkels alternativ hierzu auch direkt die Signale dieses Sensors eingelesen werden.

Mit Hilfe der Steuerbefehle Sw 305 lässt sich die Funktion der Ermittlungseinheit 100 für die Grundlenkfunktion beeinflussen, z.B. durch Auswahl verschiedener Fahrzeugabstimmungen (z.B. Sport/Komfort). Über einen übergeordneten, in Figur 3 nicht dargestellten Fahrdynamikregler können zusätzliche Lenkwinkelkorrektursignale Δδ _{ESP} 301 vorgegeben werden.

Die Berechnung der Spurstangenwegsollwertes X_{Sp},_{Cmd} 309 durch die zweite Ermittlungseinheit 101 aus den ermittelten Radlenkwinkelsollwerten δ _{HA,Cmd} (von der Arbitrierungseinheit 103) für die Hinterachslenkung erfolgt unter Berücksichtigung eines Modells für die Lenkkinematik der Hinterachse, z.B. in Form einer statischen Kennlinie.

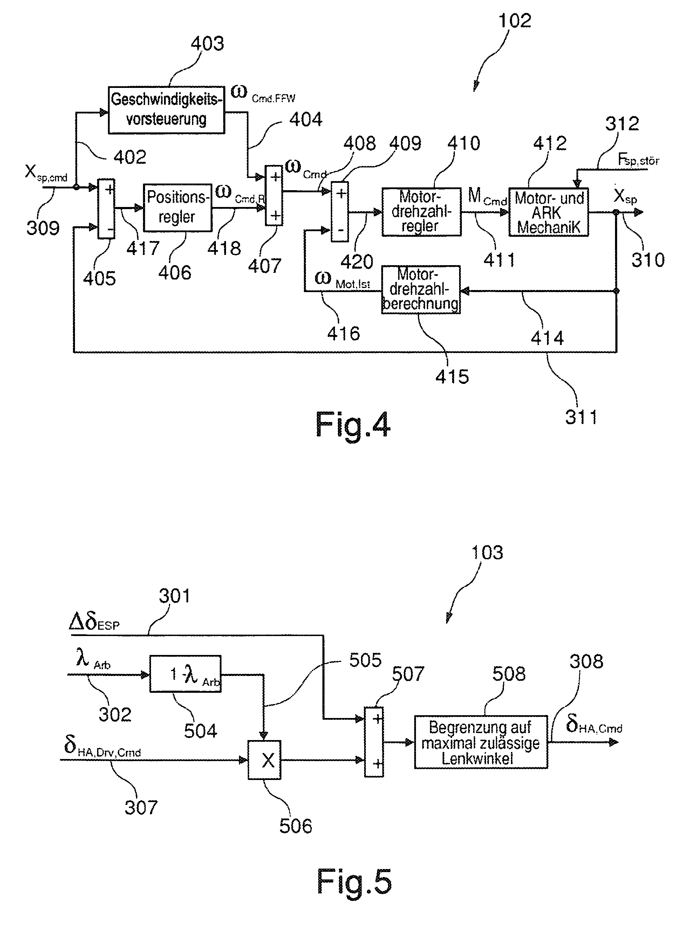

Die Struktur der Aktuatorwegregelung 102 zeigt Fig. 4. Es handelt sich hierbei um einen Positionsregler 406, dem ein Motordrehzahlregler 410 unterlagert ist.

Das Eingangssignal 309 wird dem Addierer/Subtrahierer 405 zugeführt. Dem Addierer/Subtrahierer 405 wird auch das Signal der Regelschleife 311, der Istwert des Spurstangenweges 310 zugeführt. Das Ergebnis dieser Addition/Subtraktion ist die Spurstangenwegregelabweichung 417 und geht dem Positionsregler 406 zu, welcher einen Sollwert 418 berechnet, der dem Addierer 407 zugeführt wird. Das Eingangssignal 309 wird auch über die Leitung 402 der Geschwindigkeitsvorsteuerung 403 zugeführt, welche das Ausgangssignal 404 dem Addierer 407 zuführt.

Das aus der Addition resultierende Signal 408 repräsentiert den Sollwert für die Motordrehzahl wird dem Addierer/Subtrahierer 409 zugeführt. Ebenso wird dem Addierer/Subtrahierer 409 ein Regelsignal aus einer zweiten Regelschleife 416 zugeführt, das den Istwert für die Motordrehzahl repräsentiert.

Die addierten/subtrahierten Signale 420 repräsentieren die Motordrehzahlregelabweichung und werden dann dem Motordrehzahlregler 410 zugeführt, welcher ein Signal 411 für den Motor (Motorsollmoment) und die ARK-Mechanik 412 erzeugt. Auf die Einheit 412, welche den Motor und die an den Motor angekoppelte ARK-Mechanik darstellt, wirken weiterhin Störsignale in Form einer Störkraft 312. Ausgangsgröße der Einheit 412 ist der Spurstangenweg (Ausgangssignal 310), der von dem mit dem Motorsollmoment (Signal 411) angesteuerten Motor und der ARK-Mechanik eingestellt wird.

Dieses Ausgangssignal 310 wird auch über die erste Regelschleife 311 dem ersten Addierer/Subtrahierer 405 zugeführt. Weiterhin wird dieses Signal über die zweite Regelschleife 414 der Motordrehzahlberechnung 415 zugeführt.

Zur Verbesserung des dynamischen Folgeverhaltens vor allem bei mittleren und schnellen Sollwertanforderungen für X_{Sp,cmd} ist neben dem Positionsregler 406 zusätzlich eine Geschwindigkeitsvorsteuerung (direkte Vorgabe der Sollmotordrehzahl aufgrund des Verlaufes der Sollposition) vorgesehen. Der Sollwert ω_{Cmd} 408 für den Drehzahlregler 410 ergibt sich aus der Addition der beiden Signale ω_{Cmd,Reg} 418 und ω_{Cmd,FFW} 404. Der Spurstangenweg X_{Sp} 310 wird mittels eines geeigneten Sensors gemessen. Das für die Drehzahlregelung benötigte Motordrehzahlsignal ω_{Mot,Ist} 416 kann durch Differentiation aus X_{Sp} in der Motordrehzahlermittlungseinheit 415 ermittelt werden.

Die Funktion der in Figur 3 dargestellten Arbitrierung der Lenkwinkelsollwerte zeigt Figur 5. Der resultierende Sollwert δ_{HA,Cmd} 308 ergibt sich dabei aus der Addition des aufgrund der Grundlenkfunktion ermittelten Sollwertes δ_{HA,Dry,Cmd}, 307, der den Sollwert aufgrund der Fahrervorgabe repräsentiert und des zusätzlichen Lenkwinkelkorrektursignals Δδ_{ESP} 301, das von einen übergeordneten Fahrdynamikregler für den Hinterachslenkwinkel vorgegeben werden kann. Zusätzlich kann mittels des Skalierungsfaktors λ_{Arb} 302 (0..1) der Fahreranteil abgeschwächt oder zu Null gesetzt werden, sofern dies aus fahrdynamischer Sicht sinnvoll erscheint (z.B. bei Lenkwinkelkorrekturen an der Hinterachse während einer µ-split Bremsung). Wird der Fahreranteil zu Null gesetzt, nimmt der Skalierungsfaktor λ_{Arb} 302 der Wert λ_{Arb}= 1 an.

Wie in Fig. 5 zu erkennen, wird zur Abschwächung des Fahreranteils durch den Skalierungsfaktor 302 dieser in der Einheit 504 umgerechnet, indem er von dem Wert 1 abgezogen wird. Das Ergebnis dieser Umrechnung wird über die Leitung 505 dem Multiplikatormodul 506 zugeführt, um mit dem von der Grundlenkfunktion ermittelten Sollwert 503 multipliziert zu werden. Für den Wert λ_{Arb}= 1 ist das Ergebnis der in der Einheit 504 vorgenommenen Umrechung und somit auch der Fahreranteil am Lenkwinkelsollwert Null. Für den Wert λ_{Arb}= 0 findet analog hierzu keine Abschwächung des Fahreranteils statt. Das Ergebnis der Multiplikation im Multiplikatormodul 506 repräsentiert den, mittels des Skalierungsfaktors 302 modifizierten, von der Grundlenkfunktion ermittelten Sollwert 503 und wird dann dem Addierer 507 zugeführt und zum zusätzlichen Lenkwinkelkorrektursignal 501 addiert, woraufhin der Lenkwinkel auf den maximal zulässigen Lenkwinkel durch die Begrenzungseinheit 508 begrenzt wird. Der resultierende Sollwert 308 geht dann der zweiten Ermittlungseinheit 101 zu.

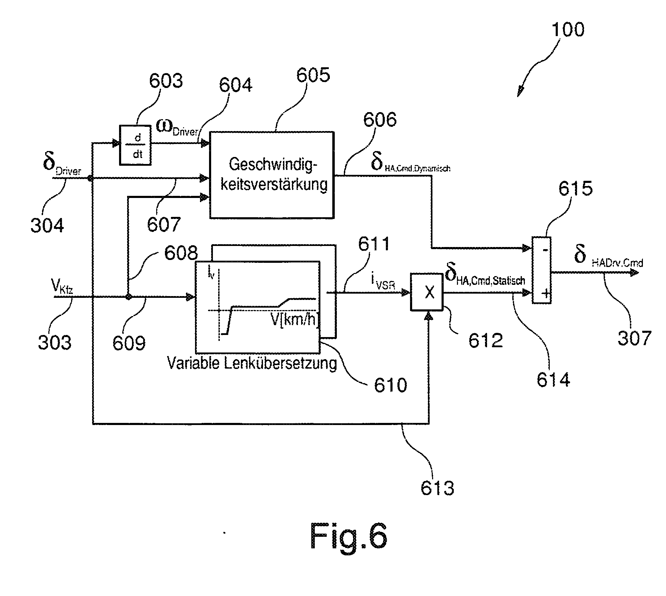

Die Grundlenkfunktion 100 ist in Figur 6 dargestellt. Die Eingangssignale für die Grundlenkfunktion sind die Fahrzeuggeschwindigkeit V_{Kfz} 303 sowie der Fahrerlenkwinkel δ_{Driver} 304 (Lenkradwinkel bzw. Radlenkwinkel der Vorderachse), welche z.B. im ESP als Messsignale zur Verfügung stehen.

Der Fahrerlenkwinkel 304 geht einerseits über den Signalpfad 607 direkt der Geschwindigkeitsverstärkungseinheit 605 zu. Weiterhin wird dieser Wert in der Berechnungseinheit 603 in eine Lenkwinkelgeschwindigkeit 604 umgerechnet, die dann ebenfalls der Geschwindigkeitsverstärkungseinheit 605 zugeführt wird. Weiterhin wird der Geschwindigkeitsverstärkungseinheit 605 die Fahrzeuggeschwindigkeit 303 zugeführt (siehe Signalpfad 608).

Hieraus berechnet die Geschwindigkeitsverstärkungseinheit 605 den dynamischen Anteil 606 für den Lenkwinkelsollwert, der dem Addierer/Subtrahierer 601 zugeführt wird.

Die Fahrzeuggeschwindigkeit wird über die Leitung 609 an die Lenkverstärkungseinheit (auch Lenkübersetzungseinheit genannt) 610 zur Ermittlung eines variablen Lenkübersetzungsfaktors i_{VSR} 611 übergeben. Dieser Wert 611 wird dann dem Multiplikator 612 zugeführt. Dem Multiplikator 612 wird weiterhin der Fahrerlenkwinkel 304 zugeführt (siehe Datenleitung 613).

Das Ergebnis der Multiplikation stellt den statischer Lenkwinkelanteil 614 dar und wird ebenfalls dem Addierer/Subtrahierer 615 zugeführt, welcher als Ergebnis den Sollwert 307 ausgibt.

Liegt der Fahrerlenkwinkel δ_{Driver} 304 als Lenkradwinkelsignal vor, so muss er unter Berücksichtigung der Lenkübersetzung der Vorderachse zunächst in entsprechende Radlenkwinkel umgerechnet werden. Da hierbei keine weiteren fahrdynamischen Zustandsgrößen, wie z.B. Gierrate oder Querbeschleunigung zurückgeführt werden, kann diese Funktion als eine rein gesteuerte Funktion betrachtet werden. Mit Hilfe der in Figur 6 nicht dargestellten Steuerbefehle Sw lässt sich die Funktion dieser Grundlenkfunktion beeinflussen. Dies kann einerseits die Auswahl einer Kennlinie für die variable Lenkübersetzung oder die Aktivierung bzw. Deaktivierung der Geschwindigkeitsverstärkungsfunktion beinhalten.

Der Sollwert δ_{HA,Dry,Cmd} 307 für den Hinterachslenkwinkel repräsentiert die Lenkvorgabe des Fahrers und setzt sich aus einem statischen Lenkwinkelanteil δ_{HA,Cmd,Statisch} 614 und einem dynamischen Anteil δ_{HA,Cmd,dynamisch} zusammen. Der statische Anteil beinhaltet eine variable Lenkübersetzung, wobei aufgrund eines von der Fahrzeuggeschwindigkeit V_{Kfz} abhängigen Übersetzungsfaktors i_{VSR} 611 die Hinterräder gleichsinnig (i_{VSR} > 0) oder gegensinnig (i_{VSR} < 0) entsprechend des eingestellten Vorderradlenkwinkels mitgelenkt werden. Ein gleichsinniges Mitlenken der Hinterräder führt zu einer Erhöhung der Fahrstabilität, während ein gegensinniges Lenken der Hinterräder eine Erhöhung der Agilität des Fahrzeugs und eine Reduzierung des Lenkaufwandes beim Parkieren bewirkt.

Die Festlegung der (statischen) Kennlinie für die variable Lenkübersetzung erfolgt üblicherweise so, dass im Rangierbereich (kleine Fahrzeuggeschwindigkeiten, < 20-30 km/h) zur Reduzierung des Lenkaufwandes ein i_{VSR} < 0 gewählt wird, während bei hohen Geschwindigkeiten (Schnellfahrbereich, > 100 - 120km/h) eine Übersetzung von i_{VSR} > 0 zur Erhöhung der Fahrstabilität gewählt wird. Im dazwischen liegenden Bereich der Fahrdynamik (V_{Kfz} = 30 .. 100-120 km/h) kann je nach Fahrzeug und Abstimmungsziel entweder eine gleichsinnig wirkende Abstimmung (Erhöhung Fahrstabilität, aber auch größerer Lenkaufwand) oder aber eine gegensinnig wirkende Abstimmung (Erhöhung Agilität, aber negative Beeinträchtigung der Fahrstabilität) festgelegt werden.

Zur Behebung dieses Zielkonflikts dient die in Figur 6 dargestellte Geschwindigkeitsverstärkungsfunktion, welche in der Geschwindigkeitsverstärkungseinheit 605 ausgeführt wird. Diese überlagert bei schnellen Lenkwinkelbewegungen des Fahrers dem statischen Lenkwinkelanteil δ_{HA,Cmd,Statisch} 614 kurzzeitig einen, im wesentlichen von der Lenkwinkelgeschwindigkeit abhängigen dynamischen Anteil δ_{HA,Cmd,dynamisch} 606, welcher von dem statischen Anteil in dem Addierer/Subtrahierer 615 subtrahiert wird und damit zur Lenkbewegung des Fahrers gegensinnig wirkt. Dieser dynamische Sollwertanteil dient nun der Erhöhung der Fahrzeugagilität und wird nur in dem fahrdynamisch relevanten Geschwindigkeitsbereich (V_{Kfz} = 30.. 100-120 km/h, siehe oben) erzeugt. Für die variable Lenkübersetzungskennlinie wird dabei aus Gründen der Fahrstabilität eine Übersetzung von i_{VSR} > 0 gewählt, so dass als Grundfunktion ein dem Fahrerlenkwinkel gleichsinniger Hinterradlenkwinkelanteil vorhanden ist.

Die Wirkungsweise der Geschwindigkeitsverstärkungsfunktion soll im Weiteren näher betrachtet werden. Solange V_{Kfz} < V_{Kfz,Min} (z.B. <30km/h) bzw. V_{Kfz} < V_{Kfz,Max} (z.B. > 100km/h) ist, ist δ_{HA,Cmd,dynamisch} = 0. Ist nun V_{Kfz} so, dass V_{Kfz,Min} <= V_{Kfz} <= V_{Kfz,Max} und finden nur langsame Lenkbewegungen des Fahrers statt, wird ebenfalls kein dynamischer Anteil erzeugt und für die Lenkungsfunktion ist weiterhin nur die statische Kennlinie wirksam. Ist die Lenkwinkelgeschwindigkeit des Fahrers ω_{Driver} größer als eine vordefinierte Aktivierungsschwelle ω_{Driver,Sw,Akt}, so wird ein vom gegenwärtigen Maximalwert der Lenkwinkelgeschwindigkeit ω_{Driver,Max} abhängiger Lenkwinkelsollwert δ_{HA,Cmd,dynamisch}, erzeugt, solange, bis der aktuelle Wert von ω_{Driver} eine zweite Schwelle ω_{Driver,Sw,Deakt} = k*ω_{Driver,Sw,Akt} wieder unterschreitet. Der Maximalwert der Lenkwinkelgeschwindigkeit ω_{Driver,Max} wird während dieser Zeit fortlaufend aktualisiert. Der Parameter k kann applikationsspezifisch gewählt werden (sinnvolle Werte k = 0,5 ± 0,2). Die Funktion δ_{HA,Cmd,dynamisch} = f(ω_{Drive,Max}) kann ein proportionaler Zusammenhang sein oder auch eine nichtlineare Funktion, die beispielsweise in Form einer entsprechenden Kennlinie definiert ist. Unterschreitet der aktuelle Wert von ω_{Driver} die Schwelle ω_{Driver,Sw,Deakt} so wird der zu diesem Zeitpunkt vorliegende Wert für δ_{HA,Cmd,dynamisch,} langsam linear bis auf den Wert 0 reduziert. Dies erfolgt innerhalb einer vordefinierten Zeit T. Treten während dieses Zeitraumes Lenkwinkelgeschwindigkeit ω_{Driver} auf, die die Aktivierungsschwelle ω_{Driver,Sw,Akt} überschreiten (z.B. beim Slalomfahren oder Spurwechsel), so wird dieser Vorgang abgebrochen und erneut ein Lenkwinkelsollwert δ_{HA,Cmd,dynamisch} = f(ω_{Driver,Max}) erzeugt.

Der dynamische Anteil beinhaltet eine Geschwindigkeitsverstärkungsfunktion, die bei schnellen Lenkwinkelbewegungen des Fahrers dem statischen Lenkwinkelanteil δ _{HA,Cmd,Statisch} kurzzeitig einen, im wesentlichen von der Lenkwinkelgeschwindigkeit abhängigen dynamischen Anteil δ _{HA,Cmd,dynamisch}, überlagert und zu einer Erhöhung der Fahrzeugagilität im fahrdynamisch relevanten Geschwindigkeitsbereich führt.

Der statische Anteil der in Figur 6 gezeigten Struktur betrachtet bei der Variablen Lenkübersetzung zur Berechnung des Übersetzungsfaktors i_{VSR} lediglich die Fahrzeuggeschwindigkeit V_{Kfz}. Eingabegrößen des Fahrers, wie Lenkradwinkel und Lenkradwinkelgeschwindigkeit (Fahrerwunsch) finden hier keine Berücksichtung. Eine Verbesserung der oben beschriebenen Grundlenkfunktion besteht daher in der Berücksichtung dieser Eingabegrößen bei der Variablen Lenkübersetzung. Je nach Fahrzeugtyp, Abstimmungsziel für das Fahrzeug und gewünschtem Funktionsumfang für die Lenkfunktion kann diese Erweiterung der Grundlenkfunktion auch dazu führen, dass auf den in Figur 6 dargestellten dynamischen Anteil δ _{HA,Cmd,dynamisch} verzichtet werden kann.

Die oben und im Folgenden beschriebene Verfahren sind unabhängig von einer bestimmten konstruktiven Ausführung der Hinterradlenkung und kann sowohl bei einer Lenkungsanordnung mit zwei separaten Einzelaktuatoren für jedes Hinterrad als auch bei einem Zentralaktuator eingesetzt werden.

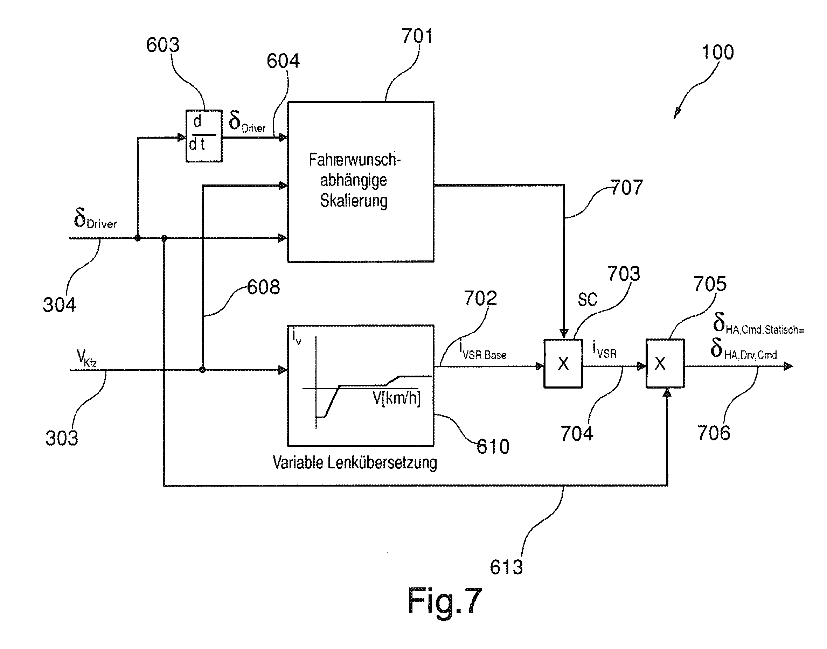

Die Grundstruktur der Grundlenkfunktion gemäß diesem Ausführungsbeispiel der Erfindung ist in Fig. 7 dargestellt. Der statische Anteil 614 der ARK Lenkfunktion aus Fig. 6 wird um die Funktion einer fahrerwunschabhängigen Skalierung SC 707 erweitert. Zur Berechung der Skalierung ist das Skalierungsmodul 701 vorgesehen.

Die Eingangsgrößen für diese Funktion sind der Fahrerlenkradwinkel 304, die Lenkradwinkelgeschwindigkeit 604 sowie zusätzlich die Fahrzeuggeschwindigkeit 303. Der Übersetzungsfaktor i_{VSR} 704 ergibt sich aus einer statischen, von der Fahrzeuggeschwindigkeit abhängenden Kennlinie (aus dem Lenkübersetzungsmodul 610) und wird mit dem Ausgangssignal SC 707 der Skalierungsfunktion in der Multiplikatoreinheit 703 multipliziert. Somit kann in Abhängigkeit von den Fahrervorgaben der Übersetzungsfaktor nach den oben beschriebenen Abstimmungskriterien modifiziert werden. Diese Modifikation kann zu einer Erhöhung bzw. Verringerung des Basiswertes i_{VSR,Base} 702 führen, was auch eine (ggf. nur kurzzeitige) Vorzeichenumkehr beinhalten kann. Dies ist wiederum abhängig vom vorliegenden Fahrzeug sowie gewähltem Abstimmungsziel. Bereits durch die Modifikation dieses Basiswertes kann beispielsweise eine gleichsinnig wirkende Basisabstimmung (Erhöhung Fahrstabilität, aber auch größerer Lenkaufwand) fahrerwunsch- bzw. bedarfsabhängig für kurze Zeit in eine gegensinnig wirkende Abstimmung (Erhöhung Agilität, aber negative Beeinträchtigung der Fahrstabilität) verändert werden. Der Übersetzungsfaktor i_{VSR} 704 wird zur Berechnung des Sollwertes für den Hinterachslenkwinkels aufgrund der Lenkvorgabe des Fahrers in der Multiplikatoreinheit 705 mit dem Fahrerlenkwinkel 304 multipliziert (siehe Leitung 613).

Aufgrund dieses neuen Berechnungsverfahrens für die variable Lenkübersetzung resultiert der Sollwert δ _{HA,Cmd,Statisch} 706 für den Lenkungsaktuator. Kann aufgrund dieser Grundstruktur und der Parametrisierung der Skalierungsfunktion auf die Überlagerung eines dynamischen Anteils δ _{HA,Cmd,dynamisch}, verzichtet werden, entspricht der Sollwert δ _{HA,Cmd,Statisch} dem resultierenden Sollwert δ _{HA,Dry,Cmd} für den Hinterachslenkwinkel.

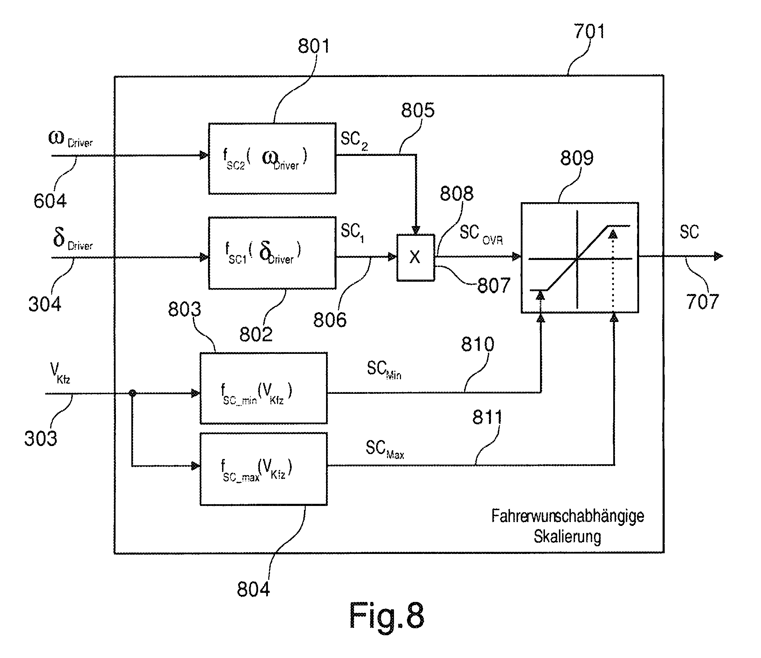

Eine genauere Ausführung der fahrerwunschabhängigen Skalierungsfunktion durch die Skalierungseinheit 701 zeigt Fig. 8. Hierbei werden getrennt für die Eingangssignale Lenkradwinkel δ _{Driver} 304 und Lenkradwinkelgeschwindigkeit ω_{Driver} 604 die beiden Skalierungsfaktoren SC1=f_{SC1}(δ _{Driver}) 806 in der ersten Berechungseinheit 802 und SC2=f_{SC2}(δ _{Driver}) 805 in der zweiten Berechungseinheit 801 berechnet. Die Multiplikation dieser beiden Faktoren in der Multiplikatoreinheit 807 ergibt eine Gesamtskalierung SC_{OVR} 808 für den Basiswert i_{VSR,Base}.

Die nachgeschaltete Begrenzungsfunktion 809 limitiert diesen Faktor SC_{OVR} auf, aus Fahrstabilitätssicht, sinnvolle Werte. Hierzu werden in Abhängigkeit der Fahrzeuggeschwindigkeit die Minimal- und Maximalwerte SC_{Min} = f_{SC_Min} (V_{Kfz}) 810 und SC_{Max} = f_{SC_Max} (V_{Kfz}) 811 für den Skalierungsfaktor SC 707 mit Hilfe der Module 803 bzw. 804 ermittelt. Diese bestimmen aus Sicht der Fahrstabilität, wie stark diese Beeinflussung der Basiskennlinie sein darf, bzw. wie weit sich der modifizierte Lenkübersetzungsfaktor vom Basiswert entfernen darf.

Die in Fig. 8 dargestellten Funktionen SC1 = f_{SC1}(δ _{Driver}) und SC2=f_{SC2}(δ _{Driver}) sowie SC_{Min} = f_{SC_Min}(V_{Kfz}) und SC_{Max} = f_{SC_Max}(V_{Kfz}) sind sehr anwendungsspezifisch, da sie stark mit dem Fahrzeugtyp sowie dem hierfür festgelegten Abstimmungsziel (siehe oben) verknüpft sind. Sie können in Form von linearen oder nichtlinearen Gleichungen modelliert oder als Kennlinien bzw. Tabellen beschrieben werden.

Die Ausgangsgröße der Begrenzungsfunktion ist gleichzeitig die Ausgangsgröße der fahrerwunschabhängigen Skalierungsfunktion und repräsentiert die resultierende Skalierung SC für den Basiswert i_{VSR,Base}.

Alternativ zur Ausführung nach Fig. 8 kann eine Berechnung des Skalierungsfaktors aufgrund der gezeigten Eingangssignale auch mit Hilfe unscharfer Logik (Fuzzy Logic) erfolgen. Hierbei werden den Eingangsdaten mittels Zugehörigkeitsfunktionen linguistischen Werte, wie z.B. KLEIN, MITTEL und GROß zugeordnet. Die Berechnung von SC erfolgt dann mit Hilfe von logischen, unscharfen Verknüpfungen dieser Eingangsdaten (Wenn/Dann-Regeln).

Bei einer gegensinnig wirkenden Fahrzeugabstimmung kann sich das Problem ergeben, dass das Fahrzeug in dem betrachteten Geschwindigkeitsbereich zwar über eine hohe Agilität verfügt, was allerdings dann z.B. bei einem durch eine Not- bzw. Gefahrensituation bedingtem Ausweichmanöver zu einem zu agilen Fahrverhalten führen kann, wobei die in dieser Situation erforderliche Fahrstabilität stark beeinträchtigt wird.

Zur Lösung dieses Zielkonfliktes kann das Lenksystem der elektromechanischen Hinterradlenkung (ARK) gemäß einem weiteren Ausführungsbeispiel der Erfindung mit einer im Fahrzeug befindlicher Umfeldsensorik, wie beispielweise einem Radarsensor, vernetzt werden. Ein derartiger Radarsensor ist beispielsweise bei Fahrzeugen mit Abstandsregelsystemen Bestandteil dieses Systems. Seine Informationen bezüglich des Abstands vorausfahrender Fahrzeuge oder allgemein vor dem Fahrzeug befindlicher Objekte stehen dann auch dem ARK-System zur Verfügung oder können zur Verfügung gestellt und von diesem ebenfalls genutzt werden. Unter Berücksichtigung dieser zusätzlichen Sensorinformation kann nun eine Anpassung der Fahrzeugabstimmung für die ARK (und damit das Gesamtfahrzeugverhalten) an eine erfasste Gefahrensituation vorgenommen werden. Dies ist insbesondere dann wesentlich, wenn als Fahrzeugabstimmung eine gegensinnig oder eine nur leicht gleichsinnig wirkende Abstimmung gewählt wurde.

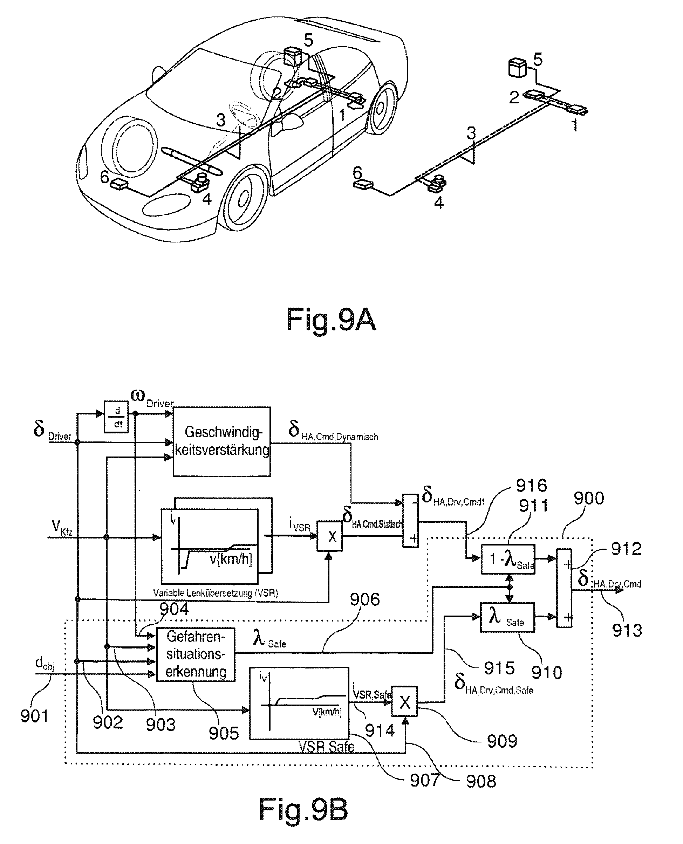

Eine resultierende Systemanordnung ist in Figur 9A dargestellt. Fig. 9A zeigt die Vernetzung des ARK Systems mit Umfeldsensorik 6 (z.B. ein Radarsensor) zur Anpassung der ARK-Lenkfunktion an Gefahrensituationen.

Es sind elektromechanische Aktuatoren 1 und 2 mit einer elektronischen Steuereinheit (ECU) gezeigt. Das Bezugszeichen 3 bezeichnet den Lenkwinkelsensor und das Bezugszeichen 4 das ESC (Electronic Stability Control). Weiterhin ist eine Batterie, beispielsweise eine 12 V Batterie 5 vorgesehen, um die Systeme mit Strom zu versorgen. Bezugszeichen 6 zeigt den Umfeldsensor.

Die Anpassung der ARK-Lenkfunktion an eine Gefahrensituation erfolgt auf folgende Weise: In der Grundeinstellung bewegt sich die ARK in einer entsprechend den Abstimmungszielen gewählten Grundlenkfunktion (siehe Figur 6), wobei für die Kennlinie der variablen Lenkübersetzung sowie die Geschwindigkeitsverstärkung nun eine mehr gegensinnig wirkende Abstimmung gewählt werden kann, welche die Agilität des Fahrzeugs erhöht. Sobald der Radarsensor ein voraus befindliches Objekt (z.B. Fahrzeug oder Hindernis) erkennt, wird zunächst geprüft, ob der Abstand d_{Obj} des Fahrzeuges zu diesem Objekt als kritisch einzustufen ist oder nicht. Unterschreitet dieser Abstand d_{Obj} eine von der Fahrzeuggeschwindigkeit V_{Kfz} abhängige Schwelle d_{Obj,Kritsch} dann wird auf eine Not- bzw. Gefahrensituation erkannt, bei der der Fahrer dem vor dem Fahrzeug befindlichen Objekt ausweichen muss. In diesem Fall wird nun umgehend von der gegenwärtig vorliegenden Grundlenkfunktion auf eine stark gleichsinnig wirkende statische Kennlinie für die variable Lenkübersetzung der ARK umgeschaltet. Das vom Fahrer durchgeführte Ausweichmanöver kann dann mit einer aus fahrdynamischen Gesichtspunkten sehr stabilen Lenkungskennlinie vorgenommen werden. Ist der Ausweichvorgang abgeschlossen (d.h. kein Objekt vorhanden, Fahrer lenkt wieder näherungsweise geradeaus), so wird aus Komfortgründen nach einem Übergangsverhalten wieder die zuvor gewählte Grundeinstellung eingenommen. Zur zusätzlichen Absicherung des zuverlässigen Umschaltens auf die gleichsinnige Kennlinie kann neben der Überwachung des Abstandes d_{Obj} noch ermittelt und als Umschaltkriterium verwendet werden, nach welcher Zeit t_{Obj,Kritisch} dieser kritische Abstand d_{Obj,Kritsch} bei gegenwärtiger und gleichbleibender Fahrzeuggeschwindigkeit V_{Kfz} und unter Berücksichtigung der ermittelten Änderungsgeschwindigkeit für den Objektabstand d_{Obj} erreicht wird.

Leitet der Fahrer noch vor Erreichen des kritischen Abstandes das Ausweichmanöver um das voraus befindliche Objekt ein, so erfolgt keine Umschaltung auf die gleichsinnig wirkende ARK-Kennlinie, da es sich hierbei noch nicht um eine Gefahrensituation handelt bzw. als solche bewertet wird und der Ausweichvorgang auch mit der gewählten Grundlenkfunktion der ARK bewältigt werden kann.

Fig. 9B zeigt eine schematische Darstellung einer ARK-Grundlenkfunktion unter Berücksichtigung der Umfeldsensorik zur Anpassung der ARK-Lenkfunktion in Gefahrensituationen. Es ist eine Analyseeinheit 905 in Form einer Gefahrensituationserkennung vorgesehen, welcher der gemessene Objektabstand 901, der Lenkwinkel 902, die aktuelle Fahrzeuggeschwindigkeit 903 sowie die Lenkwinkelgeschwindigkeit 904 zugeführt werden. Daraus analysiert die Analyseeinheit 905 die Gefahrensituation und gibt einen entsprechenden Bewertungsparameter 906 aus.

Der Bewertungsparameter 906 wird den Einheiten 910 und 911 zugeführt.

Das Modul 907 beinhaltet eine, von der Fahrzeuggeschwindigkeit abhängige, stark gleichsinnig wirkende Lenkungskennlinie, die einen Lenkungsübersetzungsfaktor i_{VSR,Safe} 914 erzeugt, welcher in dem Multiplikator 909 mit dem Fahrerlenkwinkel multipliziert wird, der dem Multiplikator über die Verbindungsleitung 908 zugeführt wird. Daraus ergibt sich dann ein Sollwert für einen sicheren Hinterachslenkwinkel 915, der daraufhin mit dem Parameter λ_{Safe} im Modul 910 gewichtet wird. Der ursprüngliche Sollwert für den Hinterachslenkwinkel 916 wird entsprechend dem Modul 911 mit (1-λ_{Safe}) gewichtet.

Die Werte aus den Modulen 910 und 911 werden mit dem Addierer 912 addiert, woraus sich dann der tatsächliche Sollwert für den Achslenkwinkel 913 ergibt.

Die Zusatzmodule 905, 907, 909, 910, 911 und 912 können in einem Gesamtmodul 900 untergebracht sein.

Die beschriebene Anpassung der ARK-Lenkfunktion an eine Gefahrensituation führt zu einer Erweiterung der in Figur 6 dargestellten Grundlenkfunktion für die ARK und zeigt Figur 9B in Form eines Signalflussplanes. Die um die beschriebene Funktion vorgenommene Erweiterung ist gestrichelt umrandet.

Ergebnis des Funktionsblockes "Gefahrensituationserkennung" 905 ist ein Parameter λ _{Safe} 906, der Werte zwischen 0 und 1 annehmen kann. Für λ _{Safe} = 0 ist keine Gefahrensituation erkannt und die ARK - Lenkfunktion entspricht der bereits in Figur 6 beschriebenen Grundabstimmung. Bei Erkennen der Gefahrensituation wird der Parameter auf λ _{Safe} = 1 gesetzt, was dazu führt, dass von dieser Grundfunktion auf die durch VSR_Safe definierte stark gleichsinnig wirkende Kennlinie umgeschaltet wird und der resultierende Sollwert δ _{HA,Dry,Cmd} für den Hinterachslenkwinkel sich ausschließlich aufgrund von δ _{HA,Drv,Cmd, Safe} ergibt. Hat der Funktionsblock "Gefahrensituationserkennung" aufgrund seiner Eingangsdaten erkannt, dass die Gefahrensituation nicht mehr gegeben ist, bzw. der Ausweichvorgang abgeschlossen wurde, so wird der Parameter λ _{Safe} nach einer voreingestellten Übergangszeit kontinuierlich von dem Wert λ _{Safe} = 1 auf den Wert λ _{Safe} = 0 reduziert wodurch ein komfortables Zurückschalten auf die ursprüngliche Lenkfunktion vorgenommen wird.

Neben der Vernetzung des ARK-Systems mit dem Radarsensor stellt der in Figur 9B dargestellte Funktionsblock "Gefahrensituationserkennung" die wesentliche Komponente der in Fig. 9B beschriebenen Ausführungsform dar, da dieser bei erkannter Gefahrensituation die Umschaltung von einer Grundlenkfunktion, die nun mehr in Hinblick auf eine Erhöhung der Agitität hin abgestimmt sein kann, auf eine stark gleichsinnig wirkende Lenkungsübersetzungskennlinie für die ARK (Erhöhung der Fahrstabilität) bewirkt. Diese Umschaltung wird vorgenommen, wenn mittels des Radarsensors ein vorausbefindliches Objekt (Fahrzeug, Hindernis) erkannt wurde und der ermittelte Abstand d_{Obj} die Schwelle d_{Obj,Kritsch} unterschreitet. Zusätzlich zur Absicherung bzw. alternativ hierzu wird überwacht, ob bei einem einmal erkanntem Objekt oben beschriebene Zeit t_{Obj,Kritisch} nach der dieser kritische Abstand d_{Obj,Kritsch} bei der gegenwärtigen, gleichbleibenden Fahrzeuggeschwindigkeit V_{Kfz} und unter Berücksichtigung der ermittelten Änderungsgeschwindigkeit für den Objektabstand d_{Obj} erreicht wird, abgelaufen ist. Weiteres Umschaltkriterium ist, dass der Fahrer zu diesem Zeitpunkt noch keinen Ausweichvorgang eingeleitet hat, d.h. der Fahrer lenkt nach wie vor näherungsweise geradeaus oder führt nur kleine Lenkbewegungen durch, was anhand des Lenkradwinkels und der Lenkradwinkelgeschwindigkeit entschieden wird.

Das Zurückschalten von der Lenkungskennlinie VSR_Safe auf die ursprüngliche Lenkfunktion wurde bereits behandelt und soll daher hier nicht weiter vertieft werden.

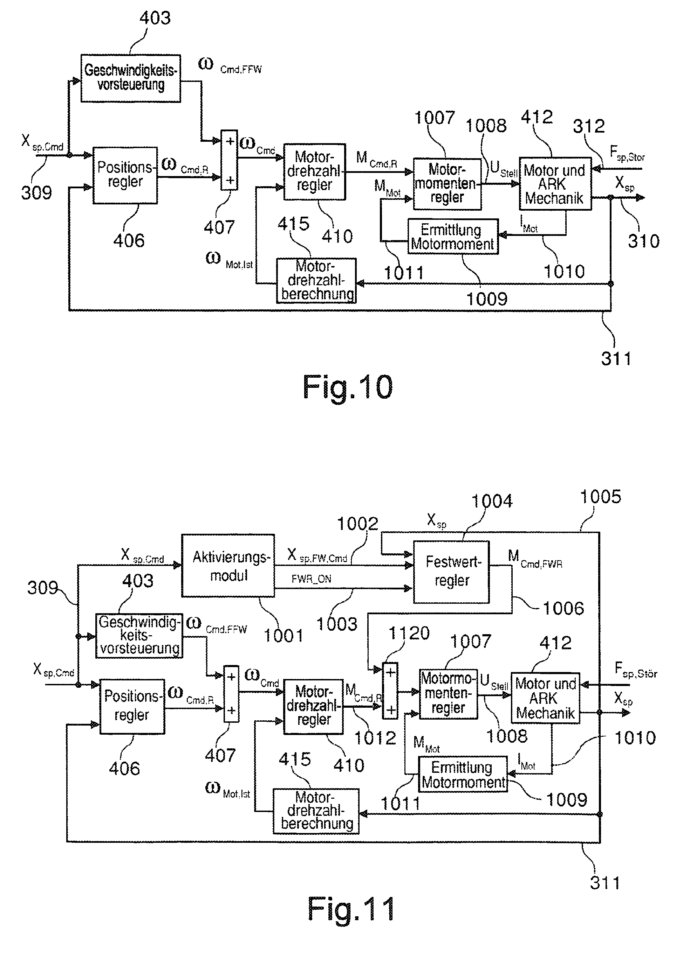

Fig. 10 zeigt eine schematische Darstellung einer Grundstruktur einer ARK-Aktuatorwegregelung gemäß einem Ausführungsbeispiel der Erfindung.

Wie bereits in Fig.4 beschrieben handelt es sich hierbei um einen Positionsregler 406, dem ein Motordrehzahlregler 410 unterlagert ist. Der Motordrehzahlregler 410 empfängt Eingangsdaten von dem Addierer 407 und der Motordrehzahlberechnungseinheit 415. Der Ausgang des Motordrehzahlreglers 410 ist an dem Motormomentregler 1007 angeschlossen. Ebenso wird dem Motormomentregler 1007 auch das aus dem Signal I_{Mot} 1010 vom Motormomentermittler 1009 ermittelte Signal M_{Mot} 1011 zugeführt. Daraus wird das Stellsignal 1008, beispielsweise in Form einer Spannung, berechnet und dem Motor der die an den Motor angekoppelte ARK-Mechanikeinheit antreibt zugeführt.

Zur Verbesserung des dynamischen Folgeverhaltens vor allem bei mittleren und schnellen Sollwertanforderungen für X_{Sp,Cmd} ist, wie in Fig.4 bereits beschrieben, neben dem Positionsregler zusätzlich eine Geschwindigkeitsvorsteuerung (direkte Vorgabe der Sollmotordrehzahl aufgrund des Verlaufes der Sollposition) vorgesehen. Der Sollwert ω _{Cmd} für den Drehzahlregler ergibt sich aus der Addition der beiden Signale ω _{Cmd,Reg} und ω _{Cmd,FFW} im Addierer 407. Der Spurstangenweg X_{Sp} wird mittels eines geeigneten Sensors gemessen. Das für die Drehzahlregelung benötigte Motordrehzahlsignal ω _{Mot,Ist} kann durch Differentiation aus X_{Sp} ermittelt werden. Stellgröße des Drehzahlreglers ist ein Sollwert für das Motormoment M_{Cmd,R}, welches von dem unterlagerten Motormomentenregler bzw. Motorstromregler eingestellt wird. Während der Positionsregler und der Motordrehzahlregler üblicherweise in der Loopzeit der Grundlenkfunktion von ca. 2 ...4 ms (je nach Dynamikanforderungen und verfügbarer Dynamik der Elektromechanik) abgearbeitet wird, läuft der unterlagerte Motormomentenregler in einer, der elektrischen Zeitkonstante des Motors angepassten, wesentlich schnelleren Loopzeit von 0,1 .. 0,2 ms bzw. ist analog realisiert.

Die Dimensionierung der Reglerparameter für Positions- und Drehzahlregler erfolgt in erster Linie im Hinblick auf ein gutes Führungsverhalten bei gleichzeitiger Minimierung der Störeinflüsse, welche durch die Störkraft F_{Sp,Stör} 312 verursacht werden. Diese resultieren maßgeblich von Störanregungen durch die Fahrbahn, z.B. aufgrund eines schlechten Straßenbelages bzw. durch den Einfluss von Querbeschleunigungen bei Kurvenfahrten oder von schnellen Lastwechseln.

Bei der in Figur 10 dargestellten Struktur entsteht nun das Problem, dass insbesondere aufgrund von nicht erfassbaren höherfrequenten Störanregungen seitens der Fahrbahn für den Regler, dieser nicht in der Lage ist, die daraus resultierenden Regelabweichungen in der Aktuatorposition mit ausreichender Schnelligkeit und der geforderten Genauigkeit auszuregeln, so dass sich durch Störkräfte bedingte, signifikante Abweichungen von der Sollposition des Aktuators ergeben. Dies wirkt sich insbesondere dann störend auf das Regelkreisverhalten der ARK und damit auch auf das Fahrverhalten des Fahrzeugs aus, wenn eine aufgrund der Grundlenkfunktion der Hinterradlenkung ermittelte Aktuatorposition konstant gehalten werden soll, z.B. bei Geradeausfahrt.

Eine Aufgabe des nachfolgend beschriebenen Ausführungsbeispiels der Erfindung ist es, einen Regler bzw. eine Lenkvorrichtung der eingangs genannten Art zu schaffen, deren bestehende Reglerstruktur bezüglich des Regelverhaltens verbessert ist, im Wesentlichen unter dem Einfluss von nicht vorhersehbaren und stark veränderlichen Störkräften.

Zur Lösung der oben in Bezugnahme auf die in Fig. 10 angesprochene Problematik ist eine Erweiterung dieser Regelkreisstruktur um einen zusätzlichen Festwertregler sowie um ein Funktionsmodul, welches die bedarfs- bzw. situationsabhängige Aktivierung dieses Festwertreglers vornimmt, vorgesehen. Die resultierende Struktur als Erweiterung von Fig. 10 zeigt Fig. 11.

Fig. 11 zeigt eine schematische Darstellung einer Struktur einer ARK-Aktuatorwegregelung mit einer situationsabhängig aktivierbaren Festwertregelung gemäß einem Ausführungsbeispiel der Erfindung.

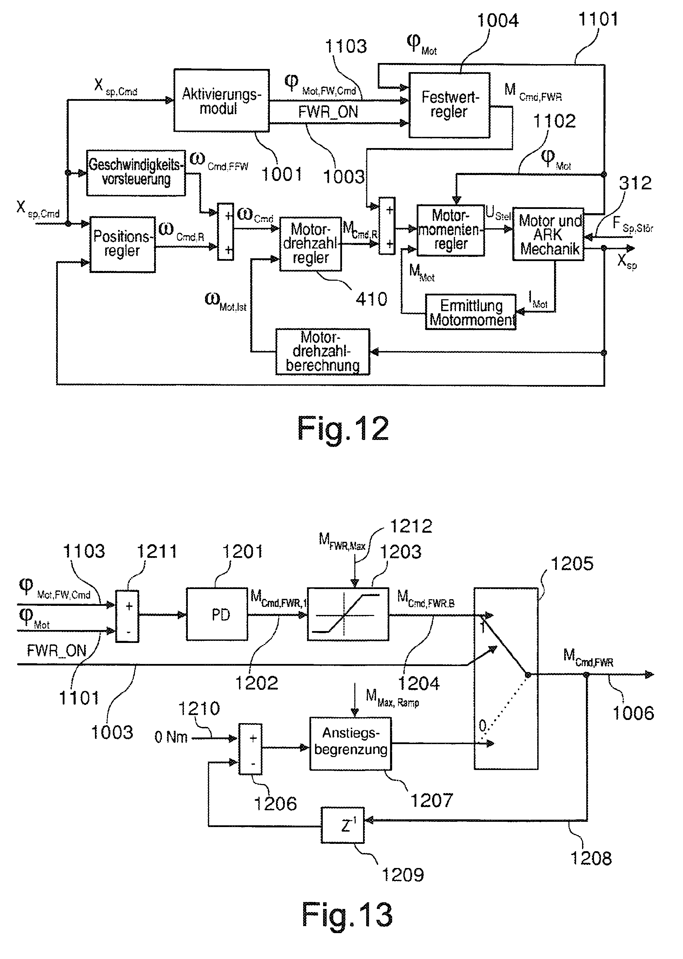

Die im Folgenden dargestellte Anordnung kann sowohl bei einem Bürstenmotor als auch bei einem in der ARK üblicherweise eingesetzten elektronisch kommutierten Motor eingesetzt werden. Diese Erweiterung der Regelkreisstruktur bleibt darüber hinaus nicht auf die Anwendung in der ARK beschränkt, sondern kann auch auf andere elektromotorisch angetriebene Stellmechaniken angewendet werden, bei denen das Problem besteht, eine vordefinierte konstante oder nur langsam veränderliche Aktuatorsollposition einzuregeln und konstant zu halten bzw. den langsamen Sollwertänderungen möglichst genau nachzuführen und dabei den Einfluss von außen auf die Mechanik wirkenden, nicht erfassbaren und im wesentlichen höherfrequenten Störkräften zu eliminieren bzw. zu minimieren. Fig. 11 zeigt eine Reglerstruktur bei Verwendung der Aktuatorposition, die mittels eines Wegsensors erfasst wird. Bei den in der ARK üblicherweise eingesetzten elektronisch kommutierten Motoren steht zur Motorkommutierung ein zusätzlicher Motorwinkelsensor zur Verfügung, der in der Regel über eine höhere Positionsauflösung verfügt und ebenfalls der Regelung zur Verfügung steht. Die daraus resultierende Reglerstruktur zeigt Fig. 12.

Es ist ein Aktivierungsmodul 1001 vorgesehen, welchem der Spurstangenwegsollwert 309 zugeführt wird. Das Aktivierungsmodul 1001 kann den Festwertregler 1004 situationsbedingt über das Signal 1003 aktivieren und überträgt den aktuellen Sollwert 1002 für den Festwertregler an diesen. Weiterhin wird dem Festwertregler 1004 der gemessene Spurstangenwegistwert über die Leitung 1005 zugeführt. Daraus berechnet der Festwertregler 1004 das zusätzliche Motorsollmoment und führt es dem Addierer 1120 über die Signalleitung 1006 zu.

Dieses zusätzliche Motorsollmoment 1006 wird dem Addierer 1120 mit dem Sollmoment 1012 vom Motordrehzahlregler 410 addiert und dem Motormomentregler 1007 zugeführt, der daraus das Stellsignal 1008 erzeugt.

Im Ausführungsbeispiel der Fig. 12 wird dem Festwertregler 1004 statt der von einem Wegsensor ermittelten Aktuatorposition der von einem Motorwinkelsensor gemessene Winkel über die Signalleitung 1101 zugeführt. Dieser Winkel wird auch dem Motormomentregler über die Signalleitung 1102 zugeführt. Der Sollwinkel des Motors wird vom Aktivierungsmodul 1001 über die Leitung 1103 an den Festwertregler übergeben (anstatt des Sollwertsignals 1002 der Fig. 11).

Bei dem in Fig. 11 bzw. Fig. 12 dargestellten Festwertregler 1004 handelt es sich um einen Motorlageregler mit proportional, differenzierendem Verhalten (PD-Regler 1201), welcher direkt ein zusätzliches Motorsollmoment M_{Cmd,FWR} 1006 erzeugt, das dem Sollmoment M_{Cmd,R} 1012 des Drehzahlreglers 410 additiv überlagert wird. Dabei ist es wesentlich, dass dieser zusätzlich in den Regelkreis eingefügte und durch das Signal FWR_ON = 1 1003 aktivierbare Festwertregler 1004 in der schnellen Loopzeit des Motormomentenreglers arbeitet, damit dieser die durch die Störkräfte F_{Sp,Stör} 312 bedingten Positionsabweichungen möglichst schnell und mit sehr kurzen Reaktionszeiten ausregeln kann.

Dem Basisregler, bestehend aus dem Positionsregler 406, der Geschwindigkeitsvorsteuerung 403 und dem Motordrehzahlregler 410, kommt dann im Wesentlichen die Aufgabe des Einstellens eines guten Führungsverhaltens zu. Er wird durch diese Maßnahme bei der Reaktion auf Störkräfte deutlich entlastet bzw. unterstützt. Wird der Festwertregler wieder deaktiviert, so wird das zuletzt erzeugte Motorsollmoment M_{Cmd,FWR} rampenförmig bis auf den Wert 0 Nm zurückgenommen. Da es sich bei dem Festwertregler um einen Motorpositionsregler handelt, wird, um störende Überlagerungen mit dem Positionsregler der Basisregelung bei zu großen Abweichungen der Istposition von der Sollposition zu vermeiden, das Zusatzmoment auf ein der Anwendung angepasstes Maximalmoment begrenzt.

Fig. 13 zeigt die Struktur dieses Festwertreglers basierend auf der Anordnung nach Fig. 12.

Dem Addierer/Subtrahierer 1211 wird das Signal 1103 vom Aktivierungsmodul 1001 und der von einem Motorwinkelsensor gemessene Winkel über die Signalleitung 1101 zugeführt. Das daraus resultierende Signal repräsentiert die Motorwinkelregelabweichung und wird dem PD-Regler 1201 zugeführt, der daraus als Stellgröße das Signal M_{Cmd,FWR,1} 1202 erzeugt und es der Einheit 1203 zuführt.

Ebenso geht der Einheit 1203 das für den PD-Regler 1201 maximale Motorsollmoment 1212 zu. Die Einheit 1203 nimmt eine Begrenzung des Signals M_{Cmd,FWR,1} 1202 auf das minimal bzw. maximal zulässige Motorsollmoment M_{FWR,Max} 1212 vor und erzeugt als Ausgangsgröße das momentenbegrenzte Signal M_{Cmd,FWR,B} 1204, das dem nachgeschalteten Umschaltmodul 1205 zugeführt wird. Das Umschaltmodul 1205 wird angesteuert von dem Signal FWR_ON 1003, das vom Aktivierungsmodul 1001 erzeugt wird. Für FWR_ON = 1 wird der Festwertregler 1004 aktiviert und das Ausgangssignal M_{Cmd,FWR} 1006 des Umschaltmoduls 1205 entspricht dem Signal M_{Cmd,FWR,B} 1204. Ist FWR_ON = 0 ist das Ausgangssignal M_{Cmd,FWR} 1006 des Umschaltmoduls 1205 gleich dem Ausgangssignal der Anstiegsbegrenzungseinheit 1207. Die Einheiten 1210, 1207 sowie 1209 realisieren das rampenförmige Zurücknehmen des zuletzt eingestellten Zusatzmomentes auf den Wert 0 für den Fall, dass der Festwertregler mittels FWR_ON = 0 deaktiviert wird. Dem Addierer/Subtrahierer 1206 wird der Wert 0Nm über die Signalleitung 1210 zugeführt und zusätzlich das Ausgangssignal M_{Cmd,FWR} 1006 des Umschaltmoduls 1205, das über die Signalleitung 1208 zunächst in dem Modul 1209 um einen Abtastschritt verschoben wird. Das Ausgangssignal des Addierer/Subtrahierer 1206 wird der Anstiegsbegrenzungseinheit 1207 zugeführt, welche als Ausgangsgröße ein Signal erzeugt, das des zuletzt eingestellte Signal 1208 rampenförmig auf den Wert 0Nm reduziert, wobei die maximale Änderung des Signals pro Rechenschritt durch den Wert M_{Max,Ramp} festgelegt ist.

Das in Fig. 11 bzw. Fig. 12 dargestellte Aktivierungsmodul 1001 nimmt die situationsbedingte Aktivierung des Festwertreglers 1004 vor. Hierzu wird der Sollwertverlauf für X_{Sp,Cmd} betrachtet, der sich durch die 1. Ableitung von X_{Sp,Cmd} 309 ergibt. Ist dieser so, dass nur langsame Sollwertänderungen für den Spurstangenweg vorgegeben werden, bzw. dieser konstant gehalten werden soll, so wird der Festwertregler zur Einstellung eines guten Störverhaltens durch das Signal FWR_ON = 1 1003 aktiviert. Bei der Aktivierung wird ebenfalls der Sollwert für den Festwertregler 1004 übertragen, welches durch das Signal X_{Sp,FW,Cmd} 1002 bzw. ϕ _{Mot;FW;Cmd} 1103 repräsentiert wird und dem aktuellen Sollwert X_{Sp},_{Cmd} entspricht.

Bei schnellen Änderungen des Spurstangenwegsollwertes X_{Sp,Cmd} wird der Festwertregler mittels FWR_ON = 0 deaktiviert. Der Basisregler führt dann den Spurstangenweg-Istwert diesen Sollwertänderungen möglichst schnell nach. Die Schwelle V_{Sp,Cmd,On} zur Aktivierung bzw. die Schwelle V_{Sp,Cmd,Off} zur Deaktivierung ist applikationsspezifisch und kann für den einzelnen Anwendungsfall gesondert definiert werden. Dabei ist auch denkbar und möglich, dass diese Schwellen so groß gewählt werden können, dass der Festwertregler auch bei schnelleren Änderungen des Spurstangenwegsollwertes X_{Sp,Cmd} aktiviert bleibt.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Lenkvorrichtung zum Einstellen eines Radeinschlagwinkels eines Rades eines Kraftfahrzeugs, die Lenkvorrichtung aufweisend: ein Rad,
ein Radführungsglied (15) zum Ändern des Radeinschlagwinkels des Rades;
ein Lenkungssteuergerät (35) zum Steuern des Radfuhrungsgliedes (15);
wobei das Lenkungssteuergerät (35) eine erste Ermittlungseinheit (100) für eine Grundlenkfunktion und eine Aktuatorwegregelung (102) aufweist;
wobei die erste Ermittlungseinheit (100) für die Grundlenkfunktion zur Ermittlung eines ersten Lenkwinkelsollwertes Eingangssignale von Sensoren erhält, wobei die Eingangssignale mindestens die Fahrzeuggeschwindigkeit V_{Kfz} sowie den Fahrerlenkwinkel δ _{Driver} wiedergeben;
wobei die Aktuatorwegregelung (102) zur Einstellung eines Weges des Radführungsgliedes (15) auf Basis des ersten Lenkwinkelsollwertes ausgeführt ist,
**dadurch gekennzeichnet,**
**dass** eine Arbitrierungseinheit (103) und eine zweite Ermittlungseinheit (101) vorgesehen sind,
wobei die Arbitrierungseinheit (103) zur Ermittlung eines zweiten, korrigierten Lenkwinkelsollwertes aus dem ersten Lenkwinkelsollwert und gegebenenfalls unter Berücksichtigung eines Korrekturlenkwinkels (310) für die zweite Ermittlungseinheit (101) ausgeführt ist; und
wobei die Arbitrierungseinheit (103) zur Berechung des Lenkwinkelsollwertes auf Basis eines durch die erste Ermittlungseinheit (100) bereitgestellten Sollwertes, der mit einer Fahrervorgabe korrespondiert, eines Lenkwinkelkorrektursignals und eines Skalierungsfaktors (λ_{Arb} 302) zur Abschwächung eines Fahreranteils ausgeführt ist; und
wobei die zweite Ermittlungseinheit (101) der Aktuatorwegregelung (102) für die Berechnung eines einzustellenden Weges des Radführungsgliedes (15) vorgeschaltet ist.

2. Lenkvorrichtung nach Anspruch 1,
wobei es sich bei dem Rad um ein Hinterrad des Kraftfahrzeugs handelt.

3. Lenkvorrichtung nach einem der vorhergehenden Ansprüche,
wobei die Lenkvorrichtung zum Durchführen einer radindividuellen Lenkbewegung ausgeführt ist.

4. Lenkvorrichtung nach einem der vorhergehenden Ansprüche, weiterhin aufweisend:
eine Antriebseinheit;
wobei das Radführungsglied (15) mittels der Antriebseinheit in seiner Länge verstellbar ist;
wobei eine Längenänderung des Radfühnmgsgliedes (15) eine Veränderung des Radeinschlagwinkels des Rades bewirkt.

5. Lenkvorrichtung nach einem der vorhergehenden Ansprüche, weiterhin aufweisend:
einen Radträger (32) zum Tragen des Rades;
wobei der Radträger (32) über das Radführungsglied (15) mit einem Fahrzeugaufbau verbunden ist;
wobei der Radträger (32) um eine im Wesentlichen parallel zur Radebene verlaufende Achse einstellbar ist und das Radführungsglied (15) in einem Abstand von der Achse an dem Radträger angelenkt ist.

6. Lenkvorrichtung nach einem der vorhergehenden Ansprüche,
wobei die Aktuatorwegregelung (102) aufweist:
einen Positionsregler,
einen Motordrehzahlregler für einen Elektromotor des Radführungsgliedes (15);
eine erste Regelschleife zur Bereitstellung eines Motordrehzahlistwertes für den Elektromotor des Radführungsgliedes (15); und
eine zweite Regelschleife zur Bereitstellung eines Spurstangenwegistwertes für den Positionsregler.

7. Lenkvorrichtung nach einem der vorhergehenden Ansprüche,
wobei die erste Ermittlungseinheit (100) für die Grundlenkfunktion eine Geschwindigkeitsverstärkungseinheit (605) zur Ermittlung eines dynamischen Anteils für den ersten Lenkwinkelsollwert aufweist.

8. Lenkvorrichtung nach einem der vorhergehenden Ansprüche,
wobei die erste Ermittlungseinheit (100) für die Grundlenkfunktion eine Lenkverstärkungseinheit zur Ermittlung eines variablen Lenkübersetzungsfaktors (i_{VSR}) auf Basis einer aktuellen Fahrzeuggeschwindigkeit aufweist, woraus dann als Ergebnis einer Multiplikation von Lenkübersetzungsfaktor und Fahrerlenkwinkel ein statischer Anteil für den ersten Lenkwinkelsollwert berechnet wird.

9. Lenkvorrichtung nach einem der vorhergehenden Ansprüche,
wobei die erste Ermittlungseinheit (100) eine Modifikation des variablen Lenkübersetzungsfaktors in Abhängigkeit von einer Fahrervorgabe aufweist.

10. Lenkvornchtung nach Anspruch 9,
wobei die Modifikation abhängig von der Fahrzeuggeschwindigkeit erfolgt.

11. Lenkvorrichtung nach Anspruch 9 oder 10,
wobei die Fahrervorgabe mit einem gemessenen Lenkradwinkel (δ_{Driver}) und einer Lenkradwinkelgeschwindigkeit (ω_{Driver}) korrespondiert.

12. Lenkvorrichtung nach einem der Ansprüche 9 bis 11,
wobei die Modifikation auf Basis einer Fuzzy Logik erfolgt.

13. Lenkvorrichtung nach einem der Ansprüche 9 bis 12,
wobei die Modifikation des Lenkübersetzungsfaktors mit Hilfe eines Skalierungsfaktors, welcher fahrgeschwindigkeitsabhängig auf in Hinblick auf eine Fahrstabilität sinnvolle Werte begrenzt ist, erfolgt.

14. Lenkvorrichtung nach einem der vorhergehenden Ansprüche, weiterhin aufweisend:
eine Sensoreinrichtung zur Bereitstellung von Messdaten aus einem Umfeld des Fahrzeugs, welche in die Ermittlung des Sollwerts für den Radeinschlagwinkel des Rades mit einfließen.

15. Lenkvorrichtung nach Anspruch 14,
wobei die Sensoreinrichtung einen Sensor ausgewählt aus der Gruppe umfassend einen Radarsensor, einen Lidarsensor, einen optischen Sensor und einen Ultraschallsensor aufweist.

16. Lenkvorrichtung nach Anspruch 14 oder 15,
wobei die Sensoreinrichtung weiterhin eine Positionsbestimmungseinheit mit einem Satellitennavigationsempfänger und einer digitalen Karte aufweist.

17. Lenkvorrichtung nach einem der Ansprüche 14 bis 16,
wobei die Sensoreinrichtung zur Bestimmung eines Abstands zwischen dem Fahrzeug und einem Objekt ausgeführt ist.

18. Lenkvorrichtung nach einem der Ansprüche 14 bis 17, weiterhin aufweisend:
eine Analyseeinheit zur Analyse der Messdaten und zur Erkennung einer Gefahrensituation auf Basis der Analyse;
wobei die Lenkvorrichtung zur Anpassung der Lenkfunktion an die Gefahrensituation ausgeführt ist, wenn eine Gefahrensituation erkannt wurde.

19. Lenkvorrichtung nach Anspruch 18,
wobei die Anpassung der Lenkfunktion an die Gefahrensituation ein automatisches Umschalten von der aktuellen Grundlenkfunktion auf eine gleichsinnig wirkende statische Kennlinie für die variable Lenkübersetzung umfasst.

20. Lenkvorrichtung nach einem der Anspräche 18 und 19,
wobei die Analyse auf den von der Sensoreinrichtung bestimmten Abstand zwischen dem Fahrzeug und dem Objekt und einer geschätzten Zeit basiert, nach welcher ein kritischer Abstand zu dem Objekt erreicht ist.

21. Lenkvorrichtung nach einem der vorhergehenden Ansprüche,
wobei die Aktuatorwegregelung (102) aufweist:
einen Festwertregler (1004) zur Bestimmung eines zusätzlichen Motorsollmoments;
ein Funktionsmodul (1001) zur bedarfabhängigen oder situationsabhängigen Aktivierung des Festwertreglers (1004).

22. Lenkvorrichtung nach Anspruch 21,
wobei die Bestimmung des zusätzlichen Motorsollmoments durch den Festwertregler auf Basis einer von einem Sensor gemessenen Position des Motors (412) erfolgt

23. Lenkvorrichtung nach Anspruch 22,
wobei der Sensor ein Wegsensor oder ein Motorwinkelsensor ist.

24. Lenkvorrichtung nach einem der Ansprüche 21 bis 23,
wobei der Festwertregler ein Motorregler mit einem proportional, diffezenzierendem Verhalten ist.

25. Lenkvorrichtung nach einem der Ansprüche 21 bis 24,
wobei die Aktivierung des Festwertreglers durch das Funktionsmodul auf Basis des Spurstangensollwertes (309) von der zweiten Ermittlungseinheit (101) erfolgt

26. Lenkvorrichtung nach einem der Ansprüche 21 bis 25,
wobei dem Festwertregler bei Aktivierung auch der aktuell vorliegende Positionssollwert zugeführt und fortlaufend aktualisiert wird.

## Claims

1. Steering device for adjusting a wheel steering angle of a wheel of a motor vehicle, the steering device having:
a wheel, a wheel guide member (15) for changing the wheel steering angle of the wheel;
a steering control unit (35) for controlling the wheel guide member (15);
wherein the steering control unit (35) has a first acquisition unit (100) for a basic steering function and an actuator travel control system (102);
wherein the first acquisition unit (100) for the basic steering function for acquiring a first steering angle setpoint value receives input signals from sensors,
wherein the input signals represent at least the vehicle speed V_{Kfz} and the driver steering angle δ_{Driver};
wherein the actuator travel control system (102) is designed to adjust travel of the wheel guide member (15) on the basis of the first steering angle setpoint value,
**characterized in that** an arbitration unit (103) and a second acquisition unit (101) are provided,
wherein the arbitration unit (103) is designed to acquire a second, corrected steering angle setpoint value from the first steering angle setpoint value and if appropriate taking into account a correction steering angle (310) for the second acquisition unit (101); and
wherein the arbitration unit (103) is designed to calculate the steering angle setpoint value on the basis of a setpoint value which is made available by the first acquisition unit (100) and which corresponds to a driver specification, a steering angle correction signal and a scaling factor (λ_{Arb} 302₎ for attenuating a driver's portion; and
wherein the second acquisition unit (101) is connected upstream of the actuator travel control system (102) for calculating travel, which is to be adjusted, of the wheel guide member (15).

2. Steering device according to Claim 1,
wherein the wheel is a rear wheel of the motor vehicle.

3. Steering device according to one of the preceding claims,
wherein the steering device is designed to carry out a wheel-specific steering movement.

4. Steering device according to one of the preceding claims, further having:
a drive unit;
wherein the length of the wheel guide member (15) can be adjusted by means of the drive unit;
wherein a change in the length of the wheel guide member (15) brings about a change in the wheel steering angle of the wheel.

5. Steering device according to one of the preceding claims, further having:
a wheel mount (32) for mounting the wheel;
wherein the wheel mount (32) is connected to a vehicle body via the wheel guide member (15);
wherein the wheel mount (32) can be adjusted about an axis extending essentially parallel to the plane of the wheel, and the wheel guide member (15) is coupled to the wheel mount at a distance from the axis.

6. Steering device according to one of the preceding claims,
wherein the actuator travel control system (102) has:
a position controller;
a motor speed controller for an electric motor of the wheel guide member (15);
a first control loop for making available a motor speed actual value for the electric motor of the wheel guide member (15); and
a second control loop for making available a steering tie rod travel actual value for the position controller.

7. Steering device according to one of the preceding claims,
wherein the first acquisition unit (100) for the basic steering function has a speed booster unit (605) for acquiring a dynamic portion for the first steering angle setpoint value.

8. Steering device according to one of the preceding claims,
wherein the first acquisition unit (100) for the basic steering function has a steering transmission unit for acquiring a variable steering transmission factor (i_{VSR}) on the basis of a current vehicle speed, from which a static portion for the first steering angle setpoint value is then calculated as a result of a multiplication of steering transmission factor and driver steering angle.

9. Steering device according to one of the preceding claims,
wherein the first acquisition unit (100) has a modification of the variable steering transmission factor as a function of a driver's specification.

10. Steering device according to claim 11,
wherein the modification is carried out as a function of the vehicle speed.

11. Steering device according to Claim 9 or 10,
wherein the driver's specification corresponds to a measured steering wheel angle (δ_{Driver}) and a steering wheel angle speed (ω_{Driver}).

12. Steering device according to one of Claims 9 to 11,
wherein the modification is carried out on the basis of fuzzy logic.

13. Steering device according to one of Claims 9 to 12,
wherein the steering transmission factor is modified using a scaling factor which is limited, as a function of the velocity, to values which are appropriate in terms of driving stability.

14. Steering device according to one of the preceding claims, also having:
a sensor device for making available measurement data from the surroundings of the vehicle, which data are also included in the acquisition of the setpoint value for the wheel steering angle of the wheel.

15. Steering device according to Claim 14,
wherein the sensor device has a sensor selected from the group comprising a radar sensor, a lidar sensor, an optical sensor and an ultrasonic sensor.

16. Steering device according to Claim 14 or 15,
wherein the sensor device also has a positiondetermining unit with a satellite navigation receiver and a digital map.

17. Steering device according to one of Claims 14 to 16,
wherein the sensor device is designed to determine a distance between the vehicle and an object.

18. Steering device according to one of Claims 14 to 17, also having:
an analysis unit for analyzing the measurement data and for detecting a hazardous situation on the basis of the analysis;
wherein the steering device is designed to adapt the steering function to the hazardous situation if a hazardous situation has been detected.

19. Steering device according to Claim 18,
wherein the adaptation of the steering function to the hazardous situation includes automatic switching over from the current basic steering function to an identically acting static characteristic curve for the variable steering transmission ratio.

20. Steering device according to one of Claims 18 and 19,
wherein the analysis is based on the distance, determined by the sensor device, between the vehicle and the object and an estimated time after which a critical distance from the object is reached.

21. Steering device according to one of the preceding claims, wherein the actuator travel control system (102) has:
a fixed value controller (1004) for determining an additional motor setpoint torque; and
a function module (1001) for demand-dependent or situation-dependent activation of the fixed value controller (1004).

22. Steering device according to Claim 21,
wherein the additional motor setpoint torque is determined by the fixed value controller on the basis of a position of the motor (412) which is measured by a sensor.

23. Steering device according to Claim 22,
wherein the sensor is a travel sensor or a motor angle sensor.

24. Steering device according to one of Claims 21 to 23,
wherein the fixed value controller is a motor controller with a proportional-differential behavior.

25. Steering device according to one of Claims 21 to 24,
wherein the fixed value controller is activated by the function module on the basis of the steering tie rod setpoint value (309) from the second acquisition unit (101).

26. Steering device according to one of Claims 21 to 25,
wherein, when activation occurs, the currently present position setpoint value is also fed to the fixed value controller and continuously updated.

## Revendications

1. Dispositif de direction destiné au réglage d'un angle de braquage de roue d'une roue d'un véhicule automobile, le dispositif de direction comportant :
une roue ;
un élément de guidage de roue (15) servant à modifier l'angle de braquage de roue de la roue ;
un appareil de commande de direction (35) servant à commander l'élément de guidage de roue (15) ;
l'appareil de commande de direction (35) comportant une première unité de calcul (100) pour une fonction de direction de base et une régulation de la course d'actionneur (102) ;
la première unité de calcul (100) de la fonction de direction de base recevant des signaux d'entrée provenant des capteurs pour calculer une première valeur théorique d'angle de direction, les signaux d'entrée transmettant au moins la vitesse du véhicule V _{Kfz} ainsi que l'angle de direction du conducteur δ _{Driver} ;
la régulation de course d'actionneur (102) étant réalisée pour régler une trajectoire de l'élément de guidage de roue (15) sur la base de la première valeur théorique d'angle de direction ;
**caractérisé en ce que** :
une unité d'arbitrage (103) et une deuxième unité de calcul (101) sont prévues ;
l'unité d'arbitrage (103) étant réalisée pour calculer une deuxième valeur théorique d'angle de direction corrigée à partir de la première valeur théorique d'angle de direction et le cas échéant en tenant compte d'un angle de correction de direction (310) pour la deuxième unité de calcul (101) ; et
l'unité d'arbitrage (103) étant réalisée pour calculer la valeur théorique d'angle de direction sur la base d'une valeur théorique mise à disposition par la première unité de calcul (100) et correspondant à une instruction du conducteur ainsi que sur la base d'un signal de correction d'angle de direction et d'un facteur d'échelle (λ _{Arb} 302) permettant de réduire l'influence de la part propre du conducteur ; et
la deuxième unité de calcul (101) de la régulation de course d'actionneur (102) étant connectée en amont pour le calcul d'une trajectoire à régler de l'élément de guidage de roue (15).

2. Dispositif de direction selon la revendication 1, la roue étant une roue arrière du véhicule automobile.

3. Dispositif de direction selon l'une quelconque des revendications précédentes, le dispositif de direction étant conçu pour effectuer un mouvement de direction individuel à la roue.

4. Dispositif de direction selon l'une quelconque des revendications précédentes, comportant en outre :
une unité d'entraînement ;
l'élément de guidage de roue (15) pouvant être réglé en longueur à l'aide de l'unité d'entraînement ;
une modification de la longueur de l'élément de guidage de roue (15) entraînant une modification de l'angle de braquage de roue de la roue.

5. Dispositif de direction selon l'une quelconque des revendications précédentes, comportant en outre :
un support de roue (32) servant à soutenir la roue ;
le support de roue (32) étant relié à une structure saillante du véhicule par le biais de l'élément de guidage de roue (15) ;
le support de roue (32) pouvant être réglé en tournant autour d'un axe s'étendant pour l'essentiel parallèlement au plan de la roue et l'élément de guidage de roue (15) étant articulé au support de roue à une certaine distance de l'axe.

6. Dispositif de direction selon l'une quelconque des revendications précédentes, la régulation de course d'actionneur (102) comportant :
un régulateur de position ;
un régulateur de vitesse de rotation du moteur prévu pour le moteur électrique de l'élément de guidage de roue (15) ;
une première boucle de réglage servant à mettre à disposition du moteur électrique de l'élément de guidage de roue (15) une valeur réelle de la vitesse de rotation du moteur ; et
une deuxième boucle de réglage servant à mettre à disposition du régulateur de position une valeur réelle de course de barre d'accouplement.

7. Dispositif de direction selon l'une quelconque des revendications précédentes, la première unité de calcul (100) de la fonction de direction de base comportant une unité de renforcement de vitesse (605) pour calculer une part dynamique de la première valeur théorique d'angle de direction.

8. Dispositif de direction selon l'une quelconque des revendications précédentes, la première unité de calcul (100) de la fonction de direction de base comportant une unité de démultiplication de direction pour calculer un facteur de démultiplication de direction (i_{VSR}) variable sur la base d'une vitesse actuelle du véhicule à partir duquel une partie statique de la première valeur théorique d'angle de direction est calculée comme le résultat d'une multiplication du facteur de démultiplication de direction et de l'angle de direction du conducteur.

9. Dispositif de direction selon l'une quelconque des revendications précédentes, la première unité de calcul (100) pouvant effectuer une modification variable du facteur de démultiplication de direction en fonction d'une instruction du conducteur.

10. Dispositif de direction selon la revendication 9, la modification se produisant en fonction de la vitesse du véhicule.

11. Dispositif de direction selon la revendication 9 ou 10, l'instruction du conducteur correspondant à un angle de volant de direction (δ _{Driver}) mesuré et à une vitesse angulaire du volant de direction (ω _{Driver}).

12. Dispositif de direction selon l'une quelconque des revendications 9 à 11, la modification se produisant sur la base d'une logique floue.

13. Dispositif de direction selon l'une quelconque des revendications 9 à 12, la modification du facteur de démultiplication de direction se produisant à l'aide d'un facteur d'échelle limité, en fonction de la vitesse de conduite, à des valeurs raisonnables par rapport à la stabilité de conduite.

14. Dispositif de direction selon l'une quelconque des revendications précédentes, comportant en outre :
un dispositif de détection servant à mettre à disposition des données de mesure provenant d'un environnement du véhicule ayant une influence sur le calcul de la valeur théorique de l'angle de braquage de roue de la roue.

15. Dispositif de direction selon la revendication 14, le dispositif de détection comprenant un capteur sélectionné dans le groupe comprenant un capteur radar, un capteur Lidar de télédétection par laser, un capteur optique et un capteur à ultrasons.

16. Dispositif de direction selon la revendication 14 ou 15, le dispositif de détection comprenant en outre une unité de détermination de position équipée d'un récepteur de navigation par satellites et une carte numérique.

17. Dispositif de direction selon l'une quelconque des revendications 14 à 16, le dispositif de détection étant réalisé de façon à déterminer une distance entre le véhicule et un objet.

18. Dispositif de direction selon l'une quelconque des revendications 14 à 17, comportant en outre :
une unité d'analyse servant à l'analyse des données de mesure et à l'identification d'une situation de danger sur la base de l'analyse ;
le dispositif de direction étant réalisé de façon à adapter la fonction de direction à la situation de danger lorsqu'une situation de danger est détectée.

19. Dispositif de direction selon la revendication 18, l'adaptation de la fonction de direction à la situation de danger comprenant une commutation automatique de la fonction de direction de base actuelle à une courbe caractéristique statique agissant dans le même sens pour réaliser la démultiplication de direction variable.

20. Dispositif de direction selon l'une quelconque des revendications 18 et 19, l'analyse se basant sur la distance entre le véhicule et l'objet définie par le dispositif de détection et un temps estimé après lequel une distance critique sera atteinte par rapport à l'objet.

21. Dispositif de direction selon l'une quelconque des revendications précédentes, la régulation de course d'actionneur (102) comportant :
un régulateur de valeur fixe (1004) servant à déterminer un couple théorique supplémentaire du moteur ;
un module fonctionnel (1001) servant à activer le régulateur de valeur fixe (1004) en fonction des besoins ou des situations.

22. Dispositif de direction selon la revendication 21, la détermination du couple théorique supplémentaire du moteur se produisant par le biais du régulateur de valeur fixe sur la base d'une position du moteur (412) mesurée par un capteur.

23. Dispositif de direction selon la revendication 22, le capteur étant un capteur de trajectoire ou un capteur d'angle de moteur.

24. Dispositif de direction selon l'une quelconque des revendications 21 à 23, le régulateur de valeur fixe étant un régulateur de moteur présentant un comportement proportionnellement différenciant.

25. Dispositif de direction selon l'une quelconque des revendications 21 à 24, l'activation du régulateur de valeur fixe se produisant par le biais du module fonctionnel sur la base de la valeur théorique de barre d'accouplement (309) de la deuxième unité de calcul (101).

26. Dispositif de direction selon l'une quelconque des revendications 21 à 25, la valeur théorique de position actuelle étant également transmise au régulateur de valeur fixe lors de l'activation et actualisée en continu.
